# EUROPEAN PATENT APPLICATION

(11) **EP 4 061 032 A1**
(43) Date of publication of application: **21.09.2022**
(21) Application number: 20900539.6
(22) Date of filing: 10.12.2020
(51) Int. Cl.: H04W 8/08

(54) **DATA PROCESSING METHOD, APPARATUS AND SYSTEM**

(30) Priority: 10.12.2019 CN 201911261341
(71) Applicant: Huawei Technologies Co., Ltd., Shenzhen, Guangdong 518129 (CN)
(72) Inventor: ZHU, Jianguo, Shenzhen, Guangdong 518129 (CN); TONG, Wei, Shenzhen, Guangdong 518129 (CN)
(74) Representative: MERH-IP Matias Erny Reichl Hoffmann Patentanwälte PartG mbB
(86) International application number: PCT/CN2020/135468
(87) International publication number: WO 2021/115396

(57) **Abstract**

Embodiments of this application provide a data processing method and apparatus, and a system, and relate to the field of communications technologies, so that in a non-local roaming scenario, a mobile user can perform access in a visited location nearby and process a service. In this way, a service processing procedure is simplified, service processing efficiency is improved, and a manual configuration operation is reduced, so that the mobile user can conveniently use a mobile communications service in a non-local location. A specific solution is as follows: A first unified data repository network element receives a first request from a network device, where the first request is used to request to perform a first processing operation on first data corresponding to a first user identifier, and the first data is associated with a service corresponding to the first user identifier; sends the first request to a second unified data repository network element; receives a response to the first request from the second unified data repository network element; and sends the response to the first request to the network device, where the response to the first request is used by the network device to process the service corresponding to the first user identifier. Embodiments of this application are used for data processing.

## Description

This application claims priority to Chinese Patent Application No. 201911261341.3, filed with the China National Intellectual Property Administration on December 10, 2019 and entitled "DATA PROCESSING METHOD AND APPARATUS, AND SYSTEM", which is incorporated herein by reference in its entirety.

### TECHNICAL FIELD

Embodiments of this application relate to the field of communications technologies, and in particular, to a data processing method and apparatus, and a system.

### BACKGROUND

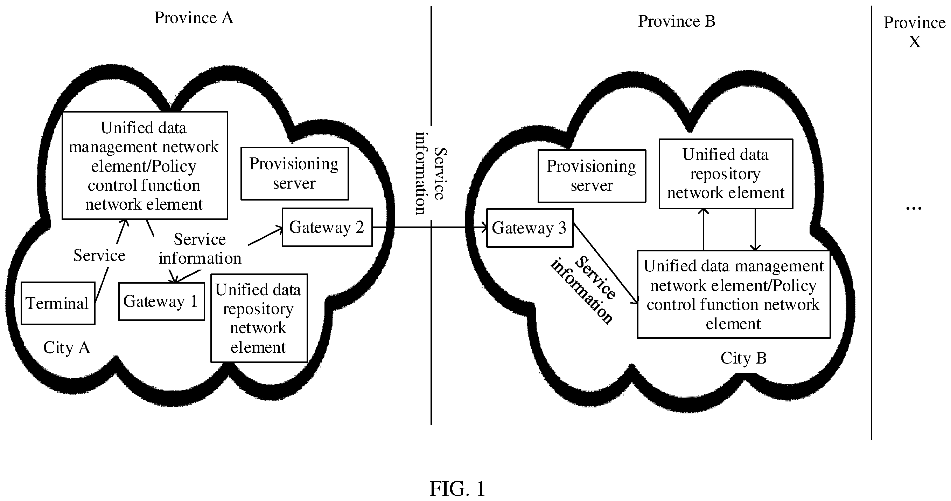

A mobile communications network may support mobile communications services such as calling and Internet access of a mobile user, including a mobile communications service of the mobile user in a home location and a non-local roaming mobile communications service of the mobile user. In the conventional technology, as shown in FIG. 1, a mobile communications network is deployed in each province, and can process various mobile communications services of mobile users in the province.

In a non-local roaming scenario, a mobile communications service of a mobile user in a visited location needs to be migrated to a home location for processing. For example, as shown in FIG. 1, a mobile communications network 1 is a mobile communications network of a province A, and the province A includes a city A; and a mobile communications network 2 is a mobile communications network of a province B, and the province B includes a city B. A home location of a mobile user 1 is the city B. The mobile user 1 initiates a mobile communications service by using a unified data management network element/policy control function network element of the city A in the mobile communications network 1. The unified data management network element/policy control function network element of the city A routes service information of the mobile user 1 to a gateway 2 of the province A based on preset routing information in a gateway 1 of the city A. Then, the service information of the mobile user 1 is routed to a gateway 3 of the province B in the mobile communications network 2 based on preset routing information in the gateway 2 of the province A. The service information of the mobile user 1 is routed to a unified data management network element/policy control function network element of the home city B of the mobile user 1 based on preset routing information and the like in the gateway 3 of the province B. In other words, the mobile service of the mobile user 1 in the visited city A is migrated to the unified data management network element/policy control function network element in the home city B. In the mobile communications network 2, the unified data management network element/policy control function network element in the home city B accesses a corresponding unified data repository network element to obtain user data or policy data corresponding to the mobile user 1, so as to process the service of the mobile user 1 in the home city B.

In an existing non-local roaming scenario, a processing procedure of a mobile communications service is complicated, and processing efficiency is low. In addition, a large amount of routing information needs to be pre-configured on a plurality of levels of gateways, and therefore manual configuration workload is heavy. This is inconvenient for a mobile user to use the mobile communications service in a non-local location.

### SUMMARY

Embodiments of this application provide a data processing method and apparatus, and a system, so that in a non-local roaming scenario, a mobile user can perform access in a visited location nearby and process a service. In this way, a service processing procedure is simplified, service processing efficiency is improved, and a manual configuration operation is reduced, so that the mobile user can also conveniently use a mobile communications service in a non-local location.

To achieve the foregoing objectives, the following technical solutions are used in embodiments of this application.

According to an aspect, an embodiment of this application provides a data processing method, including: A first unified data repository network element receives a first request from a network device. The first request is used to request to perform a first processing operation on first data corresponding to a first user identifier, and the first data is associated with a service corresponding to the first user identifier. The first unified data repository network element sends the first request to a second unified data repository network element. The first unified data repository network element receives a response to the first request from the second unified data repository network element. The first unified data repository network element sends the response to the first request to the network device, where the response to the first request is used by the network device to process the service corresponding to the first user identifier.

The first unified data repository network element may be a visited unified data repository network element, the second unified data repository network element may be a global unified data repository network element, and a third unified data repository network element may be a home unified data repository network element.

In this solution, the global unified data repository network element may receive a first request, sent by the visited unified data repository network element, that is associated with a service of a mobile user, and route the first request to the home unified data repository network element based on global routing information. The global unified data repository network element forwards a request response returned by the home unified data repository network element to the local unified data repository network element in the visited location, so that the visited unified data repository network element returns the request response to a visited management and control network element for service processing.

In this way, in a non-local roaming scenario, the visited unified data repository network element can directly access the home unified data repository network element by using the routing information provided by the global unified data repository network element, so that the visited management and control network element processes a service based on an access result, without routing to a home location through a plurality of hops as in the conventional technology and without manual pre-configuration of the routing information on gateways at various levels. This may simplify a service processing procedure, improve service processing efficiency, and reduce a manual configuration operation, so that the mobile user can conveniently use a mobile communications service in a non-local location.

In a possible implementation, the first data belongs to management data corresponding to the first user identifier. The network device is a unified data management network element, and the management data is user data corresponding to the first user identifier. Alternatively, the network device is a policy control function network element, and the management data is policy data corresponding to the first user identifier.

To be specific, a unified data management network element or policy control function network element in the visited location may request to perform a processing operation on the user data or the policy data corresponding to the first user identifier, to directly process, in the visited location based on a processing result, the mobile communications service corresponding to the mobile user.

In another possible implementation, the method further includes: The first unified data repository network element receives a second request from the second unified data repository network element, where the second request is used to request to insert the management data corresponding to the first user identifier. The first unified data repository network element inserts the management data corresponding to the first user identifier.

In this solution, the first unified data repository network element in the visited location may further insert management data of a mobile user in another home location, to migrate the home location of the mobile user to a current visited location region.

In another possible implementation, the method further includes: The first unified data repository network element receives first rollback information from the second unified data repository network element. The first unified data repository network element cancels, based on the first rollback information, the operation of inserting the management data corresponding to the first user identifier.

In this solution, if the operation of inserting the management data by the first unified data repository network element fails, the insertion operation may further be canceled, to restore to a state before the insertion operation, so as to avoid an error in management data maintained by a mobility management system.

In another possible implementation, the method further includes: The first unified data repository network element receives service policy configuration information from the second unified data repository network element, and stores the service policy configuration information. The service policy configuration information is used by the network device corresponding to the first unified data repository network element to process the service.

In this solution, the local unified data repository network element may receive the service policy configuration information uniformly distributed by the global unified data repository network element, to perform service collaboration processing with another region based on the uniformly configured service policy configuration information.

In another possible implementation, the first unified data repository network element does not store the management data corresponding to the first user identifier.

The home unified data repository network element of the user identifier stores the management data corresponding to the user identifier. The first unified data repository network element does not store the management data corresponding to the first user identifier, and the first unified data repository network element is not a home location of the first user identifier.

According to another aspect, an embodiment of this application provides a data processing method, including: A second unified data repository network element receives a first request from a first unified data repository network element. The first request is used to request to perform a first processing operation on first data corresponding to a first user identifier, and the first data is associated with a service corresponding to the first user identifier. The second unified data repository network element sends the first request to a third unified data repository network element, where the third unified data repository network element corresponds to home location information of the first user identifier. The second unified data repository network element receives a response to the first request from the third unified data repository network element. The second unified data repository network element sends the response to the first request to the first unified data repository network element.

The first unified data repository network element may be a visited unified data repository network element, the second unified data repository network element may be a global unified data repository network element, and the third unified data repository network element may be a home unified data repository network element.

According to this solution, in a non-local roaming scenario, the visited unified data repository network element can directly access the home unified data repository network element by using routing information provided by the global unified data repository network element, so that a visited management and control network element processes a service based on an access result, without routing to a home location through a plurality of hops as in the conventional technology and without manual pre-configuration of the routing information on gateways at various levels. This may simplify a service processing procedure, improve service processing efficiency, and reduce a manual configuration operation, so that a mobile user can conveniently use a mobile communications service in a non-local location.

In a possible implementation, the first data belongs to management data corresponding to the first user identifier, the second unified data repository network element stores the management data corresponding to the first user identifier, and the first processing operation is an update operation. The method further includes: The second unified data repository network element receives synchronization information from the third unified data repository network element. The second unified data repository network element updates the first data in the stored management data based on the synchronization information.

To be specific, after updating the first data in the management data, the home unified data repository network element may further indicate the global unified data repository network element to update the first data in the backup management data, to ensure consistency between the management data in the home location and the global backup management data.

In another possible implementation, the method further includes: The second unified data repository network element receives a first service request corresponding to the first user identifier from a provisioning server. The second unified data repository network element sends the first service request to the third unified data repository network element. The second unified data repository network element receives a response to the first service request from the third unified data repository network element. The second unified data repository network element sends the response to the first service request to the provisioning server.

In this solution, a terminal user can conveniently and quickly processes a service anytime and anywhere through a provisioning server in any region.

In another possible implementation, the first data belongs to the management data corresponding to the first user identifier, and the method further includes: The second unified data repository network element receives a migration service request corresponding to the first user identifier from the provisioning server. The second unified data repository network element sends a second request to the first unified data repository network element based on the migration service request, where the second request is used to indicate to insert the management data corresponding to the first user identifier. The second unified data repository network element sends a third request to the third unified data repository network element based on the migration service request, where the third request is used to indicate to delete the management data corresponding to the first user identifier. The second unified data repository network element updates the home location information of the first user identifier, where updated home location information of the first user identifier corresponds to the first unified data repository network element.

In this solution, in a case of insufficient management resources of the home location or non-local card reissuing, the provisioning server may migrate the management data of the user identifier in the home location to another region through the global unified data repository network element.

In another possible implementation, the method further includes: After receiving a deletion failure response from the third unified data repository network element or an insertion failure response from the first unified data repository network element, the second unified data repository network element sends first rollback information to the first unified data repository network element, and sends second rollback information to the third unified data repository network element. The first rollback information is used to indicate to cancel the operation of inserting the management data corresponding to the first user identifier, and the second rollback information is used to indicate to cancel the operation of deleting the management data corresponding to the first user identifier.

When the management data is migrated, if the migration fails, the global unified data repository network element may further indicate an out-migration region and an in-migration region to perform a data rollback operation, to restore to a state before the migration, to avoid an error in the management data that corresponds to the user identifier and that is stored in a mobility management system.

In another possible implementation, the method further includes: The second unified data repository network element receives a card migration service request from the provisioning server. The second unified data repository network element sends a fourth request to the third unified data repository network element based on the card migration service request, where the fourth request is used to indicate to insert card data of a user identification card in the management data corresponding to the first user identifier. The second unified data repository network element sends a fifth request to the first unified data repository network element based on the card migration service request, where the fifth request is used to indicate to delete the card data of the user identification card in the management data corresponding to the first user identifier.

In this solution, in the case of non-local card reissuing, the provisioning server may migrate card data of a new card to the home location through the global unified data repository network element, so that the management data stored in the home location corresponds to a card state of the new card.

In another possible implementation, the second unified data repository network element stores the management data corresponding to the first user identifier, and the method further includes: The second unified data repository network element receives a sixth request from the third unified data repository network element, where the sixth request is used to request to perform a second processing operation on second data corresponding to the first user identifier, the second data belongs to the management data corresponding to the first user identifier, and the second data is associated with the service corresponding to the first user identifier. The second unified data repository network element determines that the home location information of the first user identifier is not stored. The second unified data repository network element sends the management data corresponding to the first user identifier to the third unified data repository network element. The second unified data repository network element receives a management data storage success response from the third unified data repository network element. The second unified data repository network element stores a correspondence between the first user identifier and the home location information, where the home location information corresponds to the third unified data repository network element.

In this solution, the global unified data repository network element may automatically learn of and store routing information of the user identifier, so that a local unified data repository network element can directly access the home unified data repository network element of the user identifier based on the routing information stored in the global unified data repository network element. In this way, local unified data repository network elements can be interconnected on an entire network without manual configuration of the routing information, and therefore a manual configuration operation can be reduced.

In another possible implementation, the method further includes: The second unified data repository network element sends service policy configuration information to the first unified data repository network element and the third unified data repository network element.

In this solution, the global unified data repository network element may uniformly distribute the service policy configuration information to each local unified data repository network element, and each local unified data repository network element may perform service collaboration processing with another region based on the uniformly configured service policy configuration information, instead of independently decomposing and executing a service policy uniformly configured by an operator in each region as in the conventional technology.

In another possible implementation, the management data is user data corresponding to the first user identifier, or the management data is policy data corresponding to the first user identifier.

In other words, the management data may be user data managed by a unified data management network element or policy data managed by a policy control function network.

In another possible implementation, the method further includes: The second unified data repository network element initiates forward data verification to the first unified data repository network element or the third unified data repository network element. Alternatively, the second unified data repository network element responds to reverse data verification initiated by the first unified data repository network element or the third unified data repository network element.

In this solution, forward verification and reverse verification may be performed between the global unified data repository network element and the local unified data repository network element, to maintain consistency of stored data.

According to another aspect, an embodiment of this application provides a data processing method, including: A third unified data repository network element receives a first request from a second unified data repository network element. The first request is used to request to perform a first processing operation on first data corresponding to a first user identifier, and the first data is associated with a service corresponding to the first user identifier. The third unified data repository network element performs the first processing operation on the first data based on the first request. The third unified data repository network element sends a response to the first request to the second unified data repository network element.

A first unified data repository network element may be a visited unified data repository network element, the second unified data repository network element may be a global unified data repository network element, and the third unified data repository network element may be a home unified data repository network element.

In this solution, in a non-local roaming scenario, the home unified data repository network element can perform a processing operation based on a service-related request forwarded by the global unified data repository network element, and return a processing result to a visited location for service processing. This may simplify a service processing procedure, so that a mobile user can conveniently use a mobile communications service in a non-local location.

In a possible implementation, the first data belongs to management data corresponding to the first user identifier, the first processing operation is an update operation, and the method further includes: The third unified data repository network element sends synchronization information to the second unified data repository network element, where the synchronization information is used to indicate to update the first data in the management data that corresponds to the first user identifier and that is stored in the second unified data repository network element.

In this way, after updating the first data in the management data, the home unified data repository network element may further indicate the global unified data repository network element to update the first data in the backup management data, to ensure consistency between the management data in a home location and the global backup management data.

In another possible implementation, the method further includes: The third unified data repository network element receives a first service request from the second unified data repository network element. The third unified data repository network element processes, based on the first service request, a third processing operation on third data corresponding to the first user identifier, where the third data is associated with the service corresponding to the first user identifier. The third unified data repository network element sends a response to the first service request to the second unified data repository network element.

In other words, the home unified data repository network element may respond to and process a service request sent by any provisioning server through the global unified data repository network element.

In another possible implementation, the first data belongs to the management data corresponding to the first user identifier, and the method further includes: The third unified data repository network element receives a third request from the second unified data repository network element, where the third request is used to indicate to delete the management data corresponding to the first user identifier. The third unified data repository network element deletes, based on the third request, the management data corresponding to the first user identifier.

In this solution, the home location may delete management data that has been migrated to another region in a case of management data migration or non-local card reissuing.

In another possible implementation, the method further includes: The third unified data repository network element receives second rollback information from the second unified data repository network element. The third unified data repository network element cancels, based on the second rollback information, the operation of deleting the management data corresponding to the first user identifier.

In this solution, after the management data fails to be deleted, the home unified data repository network element may further perform data rollback, to restore to a state before the deletion, so as to avoid an error in management data maintained by a mobility management system.

In another possible implementation, the method further includes: The third unified data repository network element sends a sixth request to the second unified data repository network element, where the sixth request is used to request to perform a second processing operation on second data corresponding to the first user identifier, the second data is associated with the service corresponding to the first user identifier, and the second data belongs to the management data corresponding to the first user identifier. The third unified data repository network element does not store the management data corresponding to the first user identifier. The third unified data repository network element receives the management data corresponding to the first user identifier from the second unified data repository network element. The third unified data repository network element stores the management data corresponding to the first user identifier, and sends a management data storage success response to the second unified data repository network element.

In this solution, when a mobile user in a region uses a network for the first time, a local unified data repository network element may download management data corresponding to a user identifier of the mobile user from the global unified data repository network element. In this way, the local unified data repository network element stores the management data corresponding to the user identifier, and is a home unified data repository network element of the user identifier.

In another possible implementation, the method further includes: The third unified data repository network element receives service policy configuration information from the second unified data repository network element, and stores the service policy configuration information. The service policy configuration information is used by a unified data management network element or a policy control function network element corresponding to the third unified data repository network element to process the service.

In this solution, the local unified data repository network element may receive the service policy configuration information uniformly distributed by the global unified data repository network element, to perform service collaboration processing with another region based on the uniformly configured service policy configuration information.

In another possible implementation, the management data is user data corresponding to the first user identifier, or the management data is policy data corresponding to the first user identifier.

In other words, the management data may be user data managed by a unified data management network element or policy data managed by a policy control function network.

In another possible implementation, the first processing operation, the second processing operation, or the third processing operation may include a query operation or an update operation. The update operation includes an insertion operation, a deletion operation, or a replacement operation.

In other words, the home unified data repository network element may perform operations such as addition, deletion, modification, or query on to-be-operated service-related data.

According to another aspect, an embodiment of this application provides a data processing apparatus, and the data processing apparatus is a first unified data repository network element. The data processing apparatus includes: a receiving module, configured to receive a first request from a network device, where the first request is used to request to perform a first processing operation on first data corresponding to a first user identifier, and the first data is associated with a service corresponding to the first user identifier; and a sending module, configured to send the first request to a second unified data repository network element. The receiving module is further configured to receive a response to the first request from the second unified data repository network element. The sending module is further configured to send the response to the first request to the network device, where the response to the first request is used by the network device to process the service corresponding to the first user identifier.

In a possible implementation, the first data belongs to management data corresponding to the first user identifier. The network device is a unified data management network element, and the management data is user data corresponding to the first user identifier. Alternatively, the network device is a policy control function network element, and the management data is policy data corresponding to the first user identifier.

In another possible implementation, the receiving module is further configured to receive a second request from the second unified data repository network element, where the second request is used to request to insert the management data corresponding to the first user identifier. The data processing apparatus further includes a processing module, and the processing module is configured to insert the management data corresponding to the first user identifier.

In another possible implementation, the receiving module is further configured to receive first rollback information from the second unified data repository network element. The processing module is further configured to cancel, based on the first rollback information, the operation of inserting the management data corresponding to the first user identifier.

In another possible implementation, the receiving module is further configured to receive service policy configuration information from the second unified data repository network element, and store the service policy configuration information. The service policy configuration information is used by the network device corresponding to the first unified data repository network element to process the service.

In another possible implementation, the first unified data repository network element does not store the management data corresponding to the first user identifier.

According to another aspect, a data processing apparatus is a second unified data repository network element, and includes: a receiving module, configured to receive a first request from a first unified data repository network element, where the first request is used to request to perform a first processing operation on first data corresponding to a first user identifier, and the first data is associated with a service corresponding to the first user identifier; and a sending module, configured to send the first request to a third unified data repository network element, where the third unified data repository network element corresponds to home location information of the first user identifier. The receiving module is further configured to receive a response to the first request from the third unified data repository network element. The sending module is further configured to send the response to the first request to the first unified data repository network element.

In a possible implementation, the first data belongs to management data corresponding to the first user identifier, the second unified data repository network element stores the management data corresponding to the first user identifier, and the first processing operation is an update operation. The receiving module is further configured to receive synchronization information from the third unified data repository network element. The data processing apparatus further includes a processing module, configured to update the first data in the stored management data based on the synchronization information.

In another possible implementation, the receiving module is further configured to receive a first service request corresponding to the first user identifier from a provisioning server. The sending module is further configured to send the first service request to the third unified data repository network element. The receiving module is further configured to receive a response to the first service request from the third unified data repository network element. The sending module is further configured to send the response to the first service request to the provisioning server.

In another possible implementation, the first data belongs to the management data corresponding to the first user identifier. The receiving module is further configured to receive a migration service request corresponding to the first user identifier from the provisioning server. The sending module is further configured to send a second request to the first unified data repository network element based on the migration service request, where the second request is used to indicate to insert the management data corresponding to the first user identifier. The sending module is further configured to send a third request to the third unified data repository network element based on the migration service request, where the third request is used to indicate to delete the management data corresponding to the first user identifier. The processing module is further configured to update the home location information of the first user identifier, where updated home location information of the first user identifier corresponds to the first unified data repository network element.

In another possible implementation, the receiving module is further configured to receive a deletion failure response from the third unified data repository network element or an insertion failure response from the first unified data repository network element. The sending module is further configured to: send first rollback information to the first unified data repository network element, and send second rollback information to the third unified data repository network element. The first rollback information is used to indicate to cancel the operation of inserting the management data corresponding to the first user identifier, and the second rollback information is used to indicate to cancel the operation of deleting the management data corresponding to the first user identifier.

In another possible implementation, the receiving module is further configured to receive a card migration service request from the provisioning server. The sending module is further configured to send a fourth request to the third unified data repository network element based on the card migration service request, where the fourth request is used to indicate to insert card data of a user identification card in the management data corresponding to the first user identifier. The sending module is further configured to send a fifth request to the first unified data repository network element based on the card migration service request, where the fifth request is used to indicate to delete the card data of the user identification card in the management data corresponding to the first user identifier.

In another possible implementation, the second unified data repository network element stores the management data corresponding to the first user identifier. The receiving module is further configured to receive a sixth request from the third unified data repository network element, where the sixth request is used to request to perform a second processing operation on second data corresponding to the first user identifier. The second data belongs to the management data corresponding to the first user identifier, and the second data is associated with the service corresponding to the first user identifier. The processing module is further configured to determine that the home location information of the first user identifier is not stored. The sending module is further configured to send the management data corresponding to the first user identifier to the third unified data repository network element. The receiving module is further configured to receive a management data storage success response from the third unified data repository network element. The processing module is further configured to store a correspondence between the first user identifier and the home location information, where the home location information corresponds to the third unified data repository network element.

In another possible implementation, the sending module is further configured to send service policy configuration information to the first unified data repository network element and the third unified data repository network element.

In another possible implementation, the management data is user data corresponding to the first user identifier, or the management data is policy data corresponding to the first user identifier.

According to another aspect, an embodiment of this application provides a data processing apparatus, and the data processing apparatus is a third unified data repository network element. The data processing apparatus includes: a receiving module, configured to receive a first request from a second unified data repository network element, where the first request is used to request to perform a first processing operation on first data corresponding to a first user identifier, and the first data is associated with a service corresponding to the first user identifier; a processing module, configured to perform the first processing operation on the first data based on the first request; and a sending module, configured to send a response to the first request to the second unified data repository network element.

In a possible implementation, the first data belongs to management data corresponding to the first user identifier, and the first processing operation is an update operation. The sending module is further configured to send synchronization information to the second unified data repository network element, where the synchronization information is used to indicate to update the first data in the management data that corresponds to the first user identifier and that is stored in the second unified data repository network element.

In another possible implementation, the receiving module is further configured to receive a first service request from the second unified data repository network element. The processing module is further configured to perform, based on the first service request, a third processing operation on third data corresponding to the first user identifier, where the third data is associated with the service corresponding to the first user identifier. The sending module is further configured to send a response to the first service request to the second unified data repository network element.

In another possible implementation, the first data belongs to the management data corresponding to the first user identifier. The receiving module is further configured to receive a third request from the second unified data repository network element, where the third request is used to indicate to delete the management data corresponding to the first user identifier. The processing module is further configured to delete, based on the third request, the management data corresponding to the first user identifier.

In another possible implementation, the receiving module is further configured to receive second rollback information from the second unified data repository network element. The processing module is further configured to cancel, based on the second rollback information, the operation of deleting the management data corresponding to the first user identifier.

In another possible implementation, the sending module is further configured to send a sixth request to the second unified data repository network element, where the sixth request is used to request to perform a second processing operation on second data corresponding to the first user identifier, the second data is associated with the service corresponding to the first user identifier, and the second data belongs to the management data corresponding to the first user identifier. The third unified data repository network element does not store the management data corresponding to the first user identifier. The receiving module is further configured to receive the management data corresponding to the first user identifier from the second unified data repository network element. The processing module is further configured to: store the management data corresponding to the first user identifier, and send a management data storage success response to the second unified data repository network element.

In another possible implementation, the receiving module is further configured to receive service policy configuration information from the second unified data repository network element. The processing module is further configured to store the service policy configuration information. The service policy configuration information is used by a unified data management network element or a policy control function network element corresponding to the third unified data repository network element to process the service.

In another possible implementation, the management data is user data corresponding to the first user identifier, or the management data is policy data corresponding to the first user identifier.

In another possible implementation, the first processing operation includes a query operation or an update operation, and the update operation includes an insertion operation, a deletion operation, or a replacement operation.

According to another aspect, an embodiment of this application provides a data processing method, and the method may include: A network device receives a service request from a terminal. The network device sends a first request to a first unified data repository network element based on the service request, where the first request is used to request to perform a first processing operation on first data, the first data is associated with a service corresponding to a first user identifier, and the first unified data repository network element does not include management data corresponding to the first user identifier. The network device receives a response to the first request from the first unified data repository network element. The network device processes the service based on the response to the first request.

The network device may be a management and control network element, for example, a unified data management network element or a policy control function network element. In this solution, a mobile user may directly process a service by using a network device in a visited location, and does not need to migrate to a home location for processing. This may simplify a service processing procedure and improve service processing efficiency.

According to another aspect, an embodiment of this application provides a data processing apparatus, including at least one processor and a memory. The at least one processor is coupled to the memory. The memory is configured to store a computer program. The at least one processor is configured to execute the computer program stored in the memory, so that the apparatus is enabled to perform the data processing method implemented by the first unified data repository network element, the second unified data repository network element, or the third unified data repository network element in any one of the foregoing aspects or possible implementations.

According to another aspect, an embodiment of this application provides a computer-readable storage medium. The computer-readable storage medium stores a computer program or instructions. When the computer program or the instructions are run, the data processing method performed by the first unified data repository network element, the second unified data repository network element, or the third unified data repository network element in any one of the foregoing aspects or possible implementations is implemented.

According to another aspect, an embodiment of this application provides a computer program product. When the computer program product runs on a computer, the computer is enabled to perform the data processing method performed by the first unified data repository network element, the second unified data repository network element, or the third unified data repository network element in any one of the foregoing aspects or possible implementations.

According to another aspect, an embodiment of this application provides a chip system, and the chip system is used in a data processing apparatus. The chip system includes one or more interface circuits and one or more processors. The interface circuits and the processors are interconnected through a line. The interface circuit is configured to receive a signal from a memory of the electronic device, and send the signal to the processor, where the signal includes computer instructions stored in the memory. When the processor executes the computer instructions, the electronic device is enabled to perform the data processing method performed by the first unified data repository network element, the second unified data repository network element, or the third unified data repository network element in any one of the foregoing aspects or possible implementations.

According to another aspect, an embodiment of this application provides a communications system, including a first unified data repository network element, a second unified data repository network element, and a third unified data repository network element. The first unified data repository network element and the third unified data repository network element are separately connected to the second unified data repository network element. The first unified data repository network element and the third unified data repository network element separately correspond to different regions. The first unified data repository network element and the third unified data repository network element separately store management data corresponding to different user identifiers. The second unified data repository network element stores routing information of the user identifiers.

In a possible implementation, the communications system further includes a network device. The first unified data repository network element is configured to receive a first request from the network device, where the first request is used to request to perform a first processing operation on first data corresponding to a first user identifier, and the first data is associated with a service corresponding to the first user identifier. The first unified data repository network element sends the first request to the second unified data repository network element. The second unified data repository network element is configured to send the first request to the third unified data repository network element based on the routing information, where the routing information includes home location information of the first user identifier, and the third unified data repository network element corresponds to the home location information of the first user identifier. The third unified data repository network element is configured to perform the first processing operation on the first data. The third unified data repository network element is configured to send a response to the first request to the second unified data repository network element. The second unified data repository network element is configured to send the response to the first request to the first unified data repository network element. The first unified data repository network element is configured to send the response to the first request to the network device, where the response to the first request is used by the network device to process the service corresponding to the first user identifier.

In another possible implementation, the management data on the first unified data repository network element and the third unified data repository network element is backed up on the second unified data repository network element. In this way, cross-region geographic redundancy can be implemented, and reliability is higher.

In another possible implementation, the communications system includes a secondary unified data repository network element of the second unified data repository network element, a secondary unified data repository network element of the first unified data repository network element, and a secondary unified data repository network element of the third unified data repository network element. The secondary unified data repository network element also backs up corresponding management data. This can improve reliability of data management and the communications system.

In addition, for beneficial effects corresponding to the foregoing other aspects, refer to the descriptions of the beneficial effects in the method aspects. Details are not described herein again.

The foregoing aspects or other aspects are clearer and easier to understand in the following descriptions of embodiments.

### BRIEF DESCRIPTION OF DRAWINGS

FIG. 1 is a schematic diagram of a mobile communications network according to the conventional technology;
FIG. 2A is a schematic diagram of a mobility management network according to an embodiment of this application;
FIG. 2B is a schematic diagram of another mobility management network according to an embodiment of this application;
FIG. 2C is a schematic diagram of another mobility management network according to an embodiment of this application;
FIG. 2D is a schematic diagram of another mobility management network according to an embodiment of this application;
FIG. 3 is a schematic diagram of a structure of a communications device according to an embodiment of this application;
FIG. 4 is a flowchart of a data processing method according to an embodiment of this application;
FIG. 5 is a flowchart of another data processing method according to an embodiment of this application;
FIG. 6 is a flowchart of another data processing method according to an embodiment of this application;
FIG. 7 is a flowchart of another data processing method according to an embodiment of this application;
FIG. 8 is a flowchart of another data processing method according to an embodiment of this application;
FIG. 9 is a flowchart of another data processing method according to an embodiment of this application;
FIG. 10 is a flowchart of another data processing method according to an embodiment of this application;
FIG. 11 is a flowchart of another data processing method according to an embodiment of this application;
FIG. 12 is a flowchart of another data processing method according to an embodiment of this application;
FIG. 13 is a flowchart of another data processing method according to an embodiment of this application; and
FIG. 14 is a schematic diagram of a structure of a data processing apparatus according to an embodiment of this application.

### DESCRIPTION OF EMBODIMENTS

For ease of understanding of the technical solutions in embodiments of this application, the following first briefly describes technologies related to this application.

A management and control network element is a network element configured to manage and control a service of a mobile user in a mobile communications system, for example, may be a unified data management network element or a policy control function network element.

Nearby access means that a mobile user accesses a visited management and control network element and directly processes a service through the visited management and control network element.

A global route is used to provide information about a route directly to a home location of a mobile user in a global range.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of' means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In an existing non-local roaming scenario, a mobile communications service of a mobile user in a visited location needs to be migrated to a home location for processing. In an existing solution, a service processing procedure is complicated, and processing efficiency is low. In addition, a large amount of routing information needs to be pre-configured on gateways in different regions, and therefore manual configuration workload is heavy. This is inconvenient for the mobile user to use the mobile communications service in a non-local location.

Embodiments of this application provide a data processing method, so that in a non-local roaming scenario, when initiating a mobile communications service request in a visited location, a mobile user may access a nearby visited management and control network element. The visited management and control network element requests, based on a mobile communications service initiated by the mobile user, a visited unified data repository network element to perform a processing operation on management data of the mobile user. The visited unified data repository network element requests, through a global route, a home unified data repository network element to perform the processing operation, and returns, to the visited management and control network element, a response result returned by the home unified data repository network element. After receiving the response result, the visited management and control network element processes the service of the mobile user.

The management and control network element for the mobile user is configured to manage and control the service of the mobile user. For example, the management and control network element may be a unified data management network element or a policy control function network element. It may be understood that the management and control network element may alternatively be another network element. A specific device type of the management and control network element is not limited in this embodiment of this application.

The management data corresponding to the mobile user is used to support the management and control network element in processing the service of the mobile user. For example, when the management and control network element is a unified data management network element, the management data may be user data. Alternatively, when the management and control network element is a policy control function network element, the management data may be policy data.

The user data may include authentication data, subscription data, location data, or the like managed by the unified data management network element. The authentication data includes information such as an international mobile subscriber identity (international mobile subscriber identity, IMSI), a key identifier (key identifier, KI), or a cipher key K4 of a subscriber identification module (subscriber identification module, SIM)/universal subscriber identity module (universal subscriber identity module, USIM) card. The subscription data includes a mobile subscriber international ISDN/PSTN number (mobile subscriber international ISDN/PSTN number, MSISDN), call barring (call barring, CB) subscription information, call forwarding (call forwarding, CF) subscription information, call waiting (call waiting, CW) subscription information, call waiting subscription information, access point name (access point name, APN) subscription information, or the like of the user. The location information includes a number of a mobile switching center (mobile switching center, MSC)/visitor location register (visitor location register, VLR) that the user roams, a serving GPRS support node (serving GPRS support node, SGSN)/gateway GPRS support node (gateway GPRS support node, GGSN) number, cell information, a roaming status, or the like. The policy data may include quota (Quota) information and quality of service (quality of service, QoS) information of the user. The quota information includes a traffic configuration subscribed by the user.

According to the data processing method provided in embodiments of this application, in the non-local roaming scenario, the mobile user may directly process the service nearby in the visited location, and does not need to migrate the service back to a home location for processing as in the conventional technology. The visited unified data repository network element may directly access the home unified data repository network element through the global route, without migrating the service to the home location through a plurality of hops by using gateways as in the conventional technology and without manual pre-configuration of routing information on gateways at various levels. Therefore, according to the technical solution provided in embodiments of this application, in the non-local roaming scenario, the mobile user can perform access in the visited location nearby and process the service. In this way, a service processing procedure is simplified, service processing efficiency is improved, and a manual configuration operation is reduced, so that the mobile user can also conveniently and quickly use the mobile communications service in a non-local location.

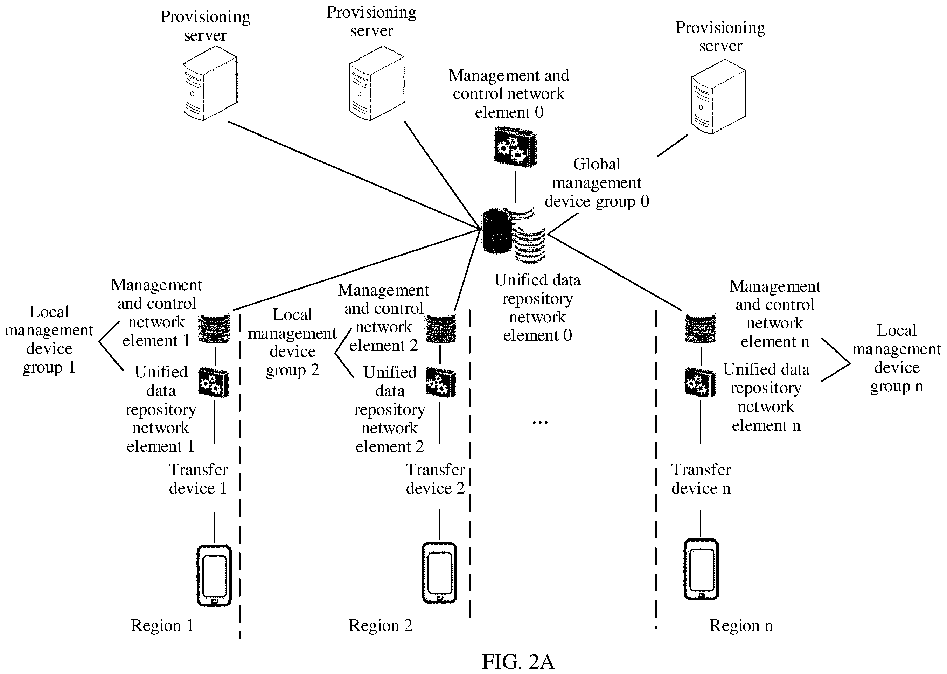

The data processing method provided in embodiments of this application may be applied to a mobility management system shown in FIG. 2A. As shown in FIG. 2A, the mobility management system may include a terminal, a transfer device, a plurality of provisioning servers, a global (global) management device group, a plurality of local (local) management device groups located in different regions, and the like. The terminal is connected to the local management device group through the transfer device, each local management device group is separately connected to the global management device group, and each provisioning server is separately connected to the global management device group. In other words, the management device groups in all the regions are interconnected through the global management device group, to form a globally interconnected mobility management network, which is different from that in the conventional technology in which each province corresponds to an independent mobile communications subnet.

In the mobility management system provided in this embodiment of this application, the terminal may initiate a mobile communications service, and the mobile service initiated by the terminal may reach the local management device group through the transfer device. The local management device group may interact with the global management device group, and process the mobile communications service initiated by the terminal. The provisioning server may initiate a mobile communications service or a data processing request, and the mobile communications service or the data processing request may reach the global management device group. The global management device group may perform data processing. Alternatively, the global management device group may interact with the local management device group, to perform mobile communications service processing or data processing in the region (for example, a home location region).

The terminal is a device having a wireless transceiver function. The terminal may be deployed on land, including an indoor or outdoor device, a hand-held device, or a vehicle-mounted device, or may be deployed on water (for example, on a steamship), or may be deployed in the air (for example, on an airplane, on a balloon, or on a satellite). The terminal may be user equipment (user equipment, UE), an access terminal, a terminal unit, a terminal station, a mobile station, a remote station, a remote terminal, a mobile device, a wireless communications device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a hand-held device having a wireless communications function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or at a fixed location.

The transfer device is configured to exchange and forward information between the terminal and the management device group, and may include a plurality of devices. In addition, different mobile communications services correspond to different signaling, or different management and control network elements correspond to different transfer devices. For example, the management and control network element is a unified data management network element. If the mobile communications service is a packet domain service, the transfer device may include devices such as an access network device, a mobility management entity (mobility management entity, MME) network element, or an SGSN network element. If the mobile communications service is a circuit domain service, the transfer device may include devices such as an access network device, a VLR network element, or an MSC network element. For another example, the management and control network element is a policy control function network element. If the mobile communications service is a power-on registration service, the transfer device may include devices such as an access network device or a mobility management function (access and mobility management function, AMF) network element. If the mobile communications service is a PPP activation service, the transfer device may include devices such as an access network device, a user plane function (user plane function, UPF) network element, or a session management function (session management function, SMF) network element.

The access network (radio access network, RAN) device is a device that provides a wireless communications function for the terminal. For example, the access network device includes but is not limited to a next-generation base station (gNodeB, gNB) in 5G, an evolved Node B (evolved Node B, eNB), a radio network controller (radio network controller, RNC), a Node B (Node B, NB), a base station controller (base station controller, BSC), a base transceiver station (base transceiver station, BTS), a home base station (for example, a home evolved NodeB, or a home Node B, HNB), a baseband unit (baseband unit, BBU), a transmission reception point (transmitting and receiving point, TRP), a transmitting point (transmitting point, TP), a mobile switching center, and the like.

The provisioning server may be a management server of an operator, for example, a management server of a customer service center of the operator.

The management device group may include a management and control network element and a unified data repository network element. The unified data repository network element may query or store management data through the corresponding management and control network element in the management device group. For example, the management and control network element may be a unified data management network element, a policy control function network element, or the like, and the management data may be user data, policy data, or the like of a mobile user.

In the mobility management network provided in this embodiment of this application, the global management device group may include a global management and control network element and a global unified data repository network element. For example, a global management device group 0 includes a management and control network element 0 (namely, a global management and control network element) and a unified data repository network element 0 (namely, a global unified data repository network element).

The local management device group may include a plurality of local management device groups in a plurality of different regions, such as a local management device group 1 in a region 1, a local management device group 2 in a region 2, and a local management device group n in a region n. The local management device group may include a local management and control network element and a local unified data repository network element. The local management device group 1 may include a management and control network element 1 (namely, a local management and control network element) and a unified data repository network element 1 (namely, a local unified data repository network element). The local management device group 2 may include a management and control network element 2 and a unified data repository network element 2. The local management device group n may include a management and control network element n and a unified data repository network element n.

Each local unified data repository network element is connected to the global unified data repository network element and is interconnected to each other through the global unified data repository network element. Each provisioning server is connected to the global unified data repository network element.

In the mobility management network, the management and control network element may also be referred to as a front end (front end, FE) device for service management, and the unified data repository network element may also be referred to as a back end (back end, BE) device for service management. It should be noted that the FE device and the BE device may be integrated together, or may be independent devices. This is not limited in this embodiment of this application. For example, in 2G to 4G communications, the unified data repository network element may be integrated into the management and control network element. In 5G communications, the unified data repository network element and the management and control network element are physical devices independent of each other.

It should be noted that the "region" in this embodiment of this application may have different division based on an actual situation. For example, "global" corresponds to China, and "different regions" correspond to different provinces or municipalities in China. For another example, "global" corresponds to the world, and "different regions" correspond to different countries.

In this embodiment of this application, a local unified data repository network element in a region i (where i is a positive integer) stores management data corresponding to a mobile user whose home location is the region i. The global unified data repository network element may automatically obtain global routing information of the home location of the mobile user through learning. Any local unified data repository network element may access the management data on the unified data repository network element in the home location region i of the mobile user based on the global routing information.

In this way, based on the mobility management system provided in this embodiment of this application, when the mobile user initiates a mobile communications service in a visited location, the mobile user may access a nearby local management and control network element in the visited location. The local management and control network element in the visited location requests a local unified data repository network element in the visited location to perform a processing operation on the management data of the mobile user. The local unified data repository network element in the visited location requests, by using routing information stored in the global unified data repository network element, a local unified data repository network element in a home location to perform the processing operation, and returns a response result returned by the local unified data repository network element in the home location to the local management and control network element in the visited location. After receiving the response result, the local management and control network element in the visited location processes the service of the mobile user.

In some embodiments, the global unified data repository network element may back up management data of all mobile users. In other words, the global unified data repository network element backs up management data of a mobile user stored in each local unified data repository network element. In this way, when a local unified data repository network element in a region is faulty, the global unified data repository network element may provide backup management data, to provide cross-region geographic redundancy assurance and ensure that a service of a mobile user can be normally performed.

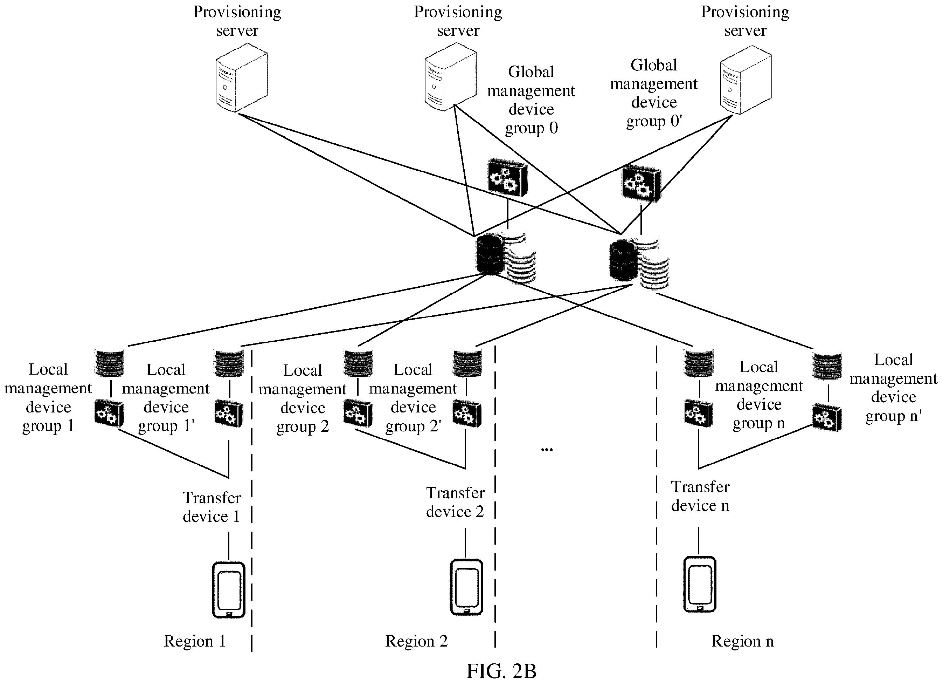

In some other embodiments, the global management device group and the local management device group are in a primary-secondary mode. For example, refer to FIG. 2B. The global management device group includes a primary global management device group 0 and a secondary global management device group 0'. The local management device group 1 in the region 1 includes a primary local management device group 1 and a secondary local management device group 1'. The local management device group 2 in the region 2 includes a primary local management device group 2 and a secondary local management device group 2'. The local management device group n in the region n includes a primary local management device group n and a secondary local management device group n'.

A local unified data repository network element in the secondary local management device group also stores management data corresponding to a mobile user whose home location is the region. When a primary local unified data repository network element in the primary local management device group is faulty, the secondary unified data repository network element in the secondary local region management device group in the region may provide the backup management data. In this way, an independent redundancy system can be provided in the region, to ensure that a service of the mobile user can be normally performed.

It can be learned that the mobility management system provided in this embodiment of this application can provide two levels of service redundancy assurance: intra-region and cross-region, and therefore reliability is higher.

The mobility management system provided in this embodiment of this application may be based on a plurality of network architectures. A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

For example, the mobility management system provided in this embodiment of this application may be based on a 5G network architecture, a 6G network architecture in future communication, or the like. The global management device group and the local management device group may be devices in the 5G network architecture, devices in the 6G network architecture in future communications, or the like.

For example, when the global and local management and control network elements each are a unified data management network element, the unified data management network element is configured to process a first user identifier, access authentication, registration, mobility management, or the like. In the 5G communications, the unified data management network element may be a unified data management (unified data management, UDM) network element. In future communications such as 6G communications, the unified data management network element may still be a UDM network element or have another name. This is not limited in this embodiment of this application.

When the global and local management and control network elements each are a policy control function network element, the policy control function network element is configured to guide a unified policy framework for network behavior, and provide policy rule information and the like for a control plane function network element. In the 5G communications, the policy control function network element may be a policy control function (policy control function, PCF) network element. In future communications such as the 6G communications, the policy control function network element may still be a PCF network element or have another name. This is not limited in this embodiment of this application.

The global and local unified data repository network elements are configured to store and query structured data. The structured data is data of a structure and semantics defined in a standard. Each party may understand, according to the standard, a meaning represented by the data. The unified data repository network element may store and query user data through the unified data management network element, may store or query policy data through the policy control function network element, or may store and query application-related data through an application function directly or through a network exposure function network element. In 5G communications, the unified data repository network element may be a unified data repository (unified data repository, UDR) network element. In future communications such as the 6G communications, the unified data repository network element may still be a UDR network element or have another name. This is not limited in this embodiment of this application.

For another example, the mobility management system provided in this embodiment of this application may be compatible with the 5G network architecture, the 6G network architecture in future communications, and the 2G to 4G network architectures. The global management device group and the local management device group may be devices in the 5G network architecture, the 6G network architecture, or the like. The global management device group and the local management device group may be devices in the 2G/3G/4G/5G network architecture, the 6G network architecture, or the like.

For example, when the management and control network element is a unified data management network element, the local unified data management network element may be a UDM network element in the 5G communications, a home subscriber server (home subscriber server, HSS) or a home location register (home location register, HLR) in the 2G to 4G communications, or the like. When the management and control network element is a policy control function network element, the local unified data management network element may be a PCF network element in the 5G communications, a policy and charging rules function (policy and charging rules function, PCRF) network element or a unified policy and charging controller (unified policy and charging controller, UPCC) network element in the 2G to 4G communications, or the like. The unified data repository network element may be a UDR network element in the 5G communications, a BE device or a BE module in the 2G to 4G communications, or the like.

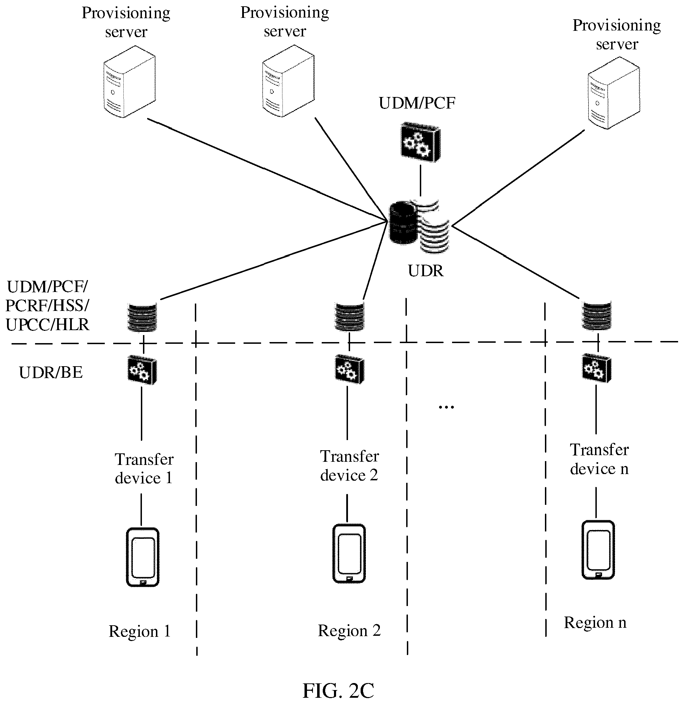

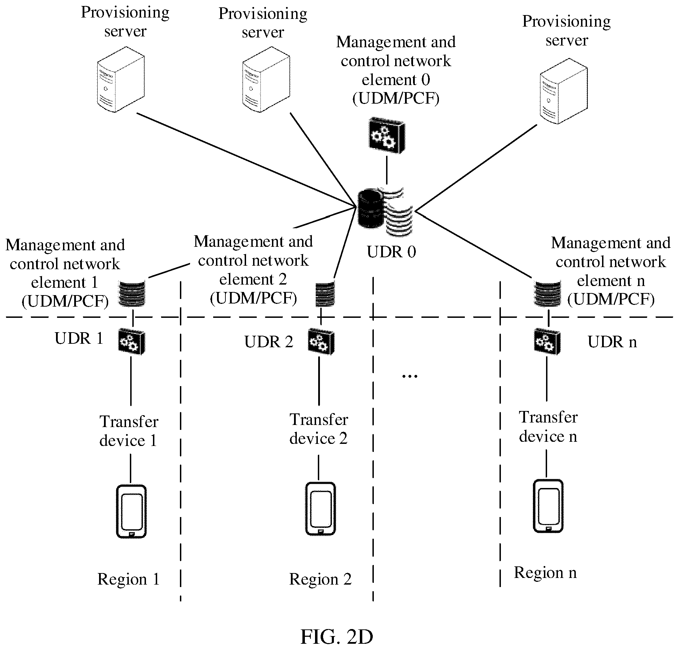

For example, in a compatible network architecture, for the mobility management system provided in this embodiment of this application, further refer to FIG. 2C. For another example, in the 5G network architecture, for the mobility management system provided in this embodiment of this application, refer to FIG. 2D.

It may be understood that the foregoing network elements or functions may be network elements in a hardware device, software functions running on dedicated hardware, or virtualized functions instantiated on a platform (for example, a cloud platform). One or more services may be obtained through division into the network elements or the functions. Further, a service independent of a network function may occur. In embodiments of this application, instances of the functions, instances of services included in the functions, or instances of services independent of network functions may be referred to as service instances.

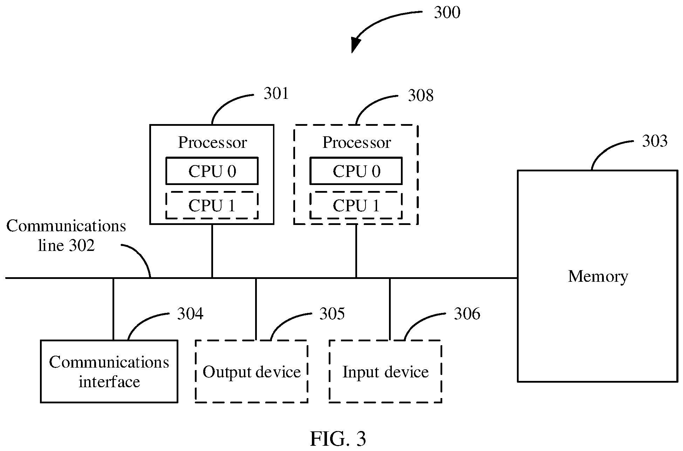

For example, the network element or the function may be implemented by using a communications device (which may also be referred to as a communications apparatus) in FIG. 3. FIG. 3 is a schematic diagram of a hardware structure of a communications device according to an embodiment of this application. The communications device 300 includes a processor 301, a communications line 302, a memory 303, and at least one communications interface (where FIG. 3 is described merely by using an example in which a communications interface 304 is included).

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 302 may include a path for transmitting information between the foregoing components.

The communications interface 304 is applicable to any apparatus such as a transceiver, and is configured to communicate with another device or a communications network such as the Ethernet, a radio access network (radio access network, RAN), or a wireless local area network (wireless local area network, WLAN).

The memory 303 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a blue-ray optical disc, or the like), a magnetic disk storage medium or another magnetic storage device, or any other medium capable of carrying or storing expected program code in a form of an instruction or a data structure and capable of being accessed by a computer. This is not limited thereto. The memory may exist independently, and be connected to the processor through the communications line 302. Alternatively, the memory may be integrated with the processor.

The memory 303 is configured to store computer-executable instructions for performing the solutions of this application, and the processor 301 controls execution. The processor 301 is configured to execute the computer-executable instructions stored in the memory 303, to implement the data processing method provided in the following embodiments of this application.

Optionally, the computer-executable instructions in this embodiment of this application may also be referred to as application program code. This is not specifically limited in this embodiment of this application.

In a specific implementation, in an embodiment, the processor 301 may include one or more CPUs, for example, a CPU 0 and a CPU 1 in FIG. 3.

In a specific implementation, in an embodiment, the communications device 300 may include a plurality of processors, for example, the processor 301 and a processor 308 in FIG. 3. Each of the processors may be a singlecore (single-CPU) processor or a multi-core (multi-CPU) processor. The processor herein may be one or more devices, circuits, and/or processing cores configured to process data (for example, computer program instructions).

In a specific implementation, in an embodiment, the communications device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, or a sensing device.

The communications device 300 may be a general-purpose device or a dedicated device. In a specific implementation, the communications device 300 may be a desktop computer, a portable computer, a network server, a personal digital assistant (personal digital assistant, PDA), a mobile phone, a tablet computer, a wireless terminal device, an embedded device, or a device having a structure similar to that in FIG. 3. A type of the communications device 300 is not limited in this embodiment of this application.

The following uses the mobility management system in the 5G network architecture shown in FIG. 2D as an example to describe in detail the data processing method provided in embodiments of this application. It should be noted that, in a future communications system, a function of each network element used in embodiments of this application may remain unchanged, but a name of each network element may change.

The following describes the data processing method provided in embodiments of this application by using an example in which a first user identifier is a user identifier of a mobile user 1, a unified data repository network element is a UDR, a first unified data repository network element is a UDR 1 in a visited location region 1 of the mobile user 1 shown in FIG. 2D, a second unified data repository network element is a global UDR 0 shown in FIG. 2D, a third unified data repository network element is a UDR n in a home location region n of the mobile user 1 shown in FIG. 2D, and a network device is a management and control network element 1 in the region 1 shown in FIG. 2D.

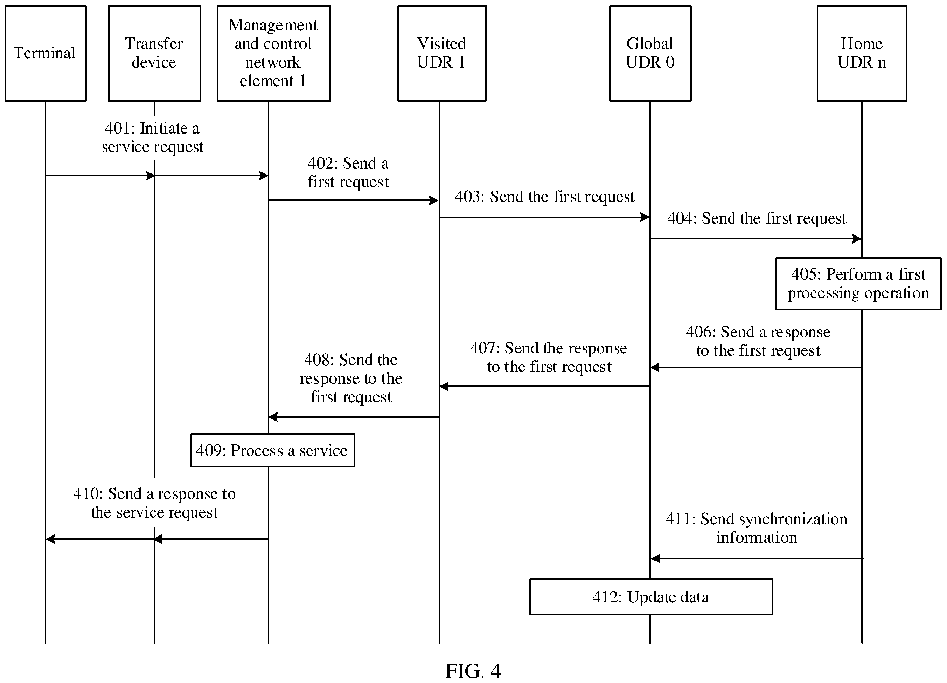

In some embodiments of this application, in a non-local roaming scenario, a mobile user may access a nearby visited management and control network element, and directly process a service through the visited management and control network element. As shown in FIG. 4, the method may include the following steps.

401: A terminal in the region 1 initiates a service request of a mobile communications service to the management and control network element 1.

The terminal in the region 1 may initiate the service request of the mobile communications service to the management and control network element 1 through a transfer device. A user identification card may be installed on the terminal, and different user identification cards may correspond to different mobile users. For example, the identification card may be a SIM card, a USIM card, or an eSIM card. The service request initiated by the terminal may carry the first user identifier of the mobile user 1, to indicate that the mobile user 1 indicated by the first user identifier initiates the service request through the terminal. For example, the first user identifier of the mobile user 1 may include an IMSI, an MSISDN, an IMPU, an IMPI, a subscriber (Subscriber) ID, or the like.

The management and control network element 1 may be a visited unified data management network element or policy control function network element of the mobile user 1 corresponding to the terminal. For example, the management and control network element 1 may be a UDM network element or a PCF network element in the region 1 in which the terminal is located. The region 1 is not a home location of the mobile user 1, and the management and control network element 1 is not a home network element of the mobile user 1. In other words, the terminal is currently in a non-local roaming state.

It can be learned from the foregoing descriptions that, different mobile communications services correspond to different signaling, or different management and control network elements 1 correspond to different transfer devices. For example, the management and control network element 1 is a unified data management network element. If the mobile communications service is a packet domain service, the transfer device may include a device such as an access network device, an MME network element, or an SGSN network element. If the mobile communications service is a circuit domain service, the transfer device may include a device such as an access network device, a VLR network element, or an MSC network element.

402: The management and control network element 1 sends a first request to the UDR 1 based on the service request, where the first request is used to request to perform a first processing operation on first data corresponding to the first user identifier, and the first data is associated with the service corresponding to the first user identifier.

After receiving the service request from the terminal, the visited management and control network element 1 performs service analysis, determines the to-be-processed first data associated with the service and the first processing operation to be performed on the first data, and generates the first request. Then, the visited management and control network element 1 sends the first request to the corresponding visited UDR 1, to request to perform the first processing operation on the first data associated with the service.

The first processing operation may include a query operation or an update operation. The update operation may include an insertion operation, a deletion operation, or a replacement operation. In other words, the first processing operation may include adding, deleting, modifying, or querying the first data.

The first data may be data in management data corresponding to the first user identifier. In other words, the first data belongs to the management data corresponding to the first user identifier. The visited UDR 1 is not a home network element, and does not store the management data corresponding to the first user identifier. The management data may be user data, policy data, or the like managed by the management and control network element 1.

When the management and control network element 1 is a unified data management network element, the management data is user data corresponding to the first user identifier. When the management and control network element 1 is a policy control function network element, the management data is policy data corresponding to the first user identifier. For related descriptions of the user data and the policy data, refer to related descriptions in the foregoing content.

The first data is associated with the service initiated by the mobile user 1, and the first data varies with the service initiated by the mobile user 1. For example, in some embodiments, the first request may carry service identifier information, different service identifier information corresponds to different first data, and the service identifier information in the first request is used to indicate to perform the first processing operation on the first data corresponding to the service identifier information.

In addition, the first processing operation performed on the first data varies with the service initiated by the mobile user 1. For example, the service initiated by the mobile user 1 is an authentication service. In this case, the first data may include authentication data in the user data corresponding to the first user identifier, and the first processing operation is querying the authentication data, so that the management and control network element 1 verifies, based on the found authentication data, validity of accessing a network by the terminal.

For another example, the service initiated by the mobile user 1 is a location update service, and the first request may include a first sub-request and a second sub-request. First data corresponding to the first sub-request may include subscription information, location information (for example, an MSC/VLR/SGSN number), and the like in the user data corresponding to the first user identifier of the user, and the first processing operation is querying the subscription information and the location information. The management and control network element 1 may determine, based on the found subscription information and location information, whether a user location changes. If the management and control network element 1 determines that the user location changes, the management and control network element 1 initiates the second sub-request, to request the home UDR to replace previous location information with new location information. In other words, first data corresponding to the second sub-request is the new location information, and the first processing operation is a replacement operation.

For another example, the service initiated by the mobile user 1 is a network access service. In this case, the first data may include a traffic quota or the like in the policy data corresponding to the first user identifier, and the first processing operation may be a query operation.

403: The UDR 1 sends the first request to the UDR 0.

After receiving the first request from the management and control network element 1, the visited UDR 1 forwards the first request to the global UDR 0. The forwarding herein may be transparent transmission, or may be adding/deleting some information to/from the first request (for example, adding some information related to the UDR 1), and then sending the first request to the UDR 0. This is not limited in this embodiment of this application. The first request sent by the UDR 1 to the UDR 0 is still used to request to perform the first processing operation on the first data.

404: The UDR 0 sends the first request to the UDR n, where the UDR n corresponds to home location information of the first user identifier.

The global UDR 0 stores global routing information. The global routing information is used to provide information about a route directly to a home location of a mobile user in a global range (or referred to as an entire network range). For example, the global routing information includes a correspondence between a user identifier and home location information. The home location information may be a home location name, a home network element, or the like.

For example, as shown in Table 1, the global routing information may include a correspondence between a user identifier of a target mobile user and home location information. The home location information may be a region name, a region number, or the like of a home location. For another example, as shown in Table 2, the global routing information may include a correspondence between a user identifier and a home UDR. For another example, as shown in Table 3, the global routing information may include a correspondence among a user identifier, home location information, and a local UDR corresponding to the home location information (which is referred to as a home UDR for short).

**Table 1**

| User identifier | Home location information |
|---|---|
| User identifier 1 | Region n |
| User identifier 2 | Region 2 |
| User identifier n | Region 1 |
| ... | ... |

**Table 2**

| User identifier | Home UDR |
|---|---|
| User identifier 1 | UDR n |
| User identifier 2 | UDR 2 |
| User identifier n | UDR 1 |
| ... | ... |

**Table 3**

| User identifier | Home location information | Home UDR |
|---|---|---|
| User identifier 1 | Region n | UDR n |
| User identifier 2 | Region 2 | UDR 2 |
| User identifier n | Region 1 | UDR 1 |
| ... | ... | ... |

The global UDR 0 may determine the home UDR n of the first user identifier based on the stored global routing information, to directly forward the first request to the home UDR n, so as to request the home UDR n to perform the first processing operation on the first data associated with the user service.

405: The UDR n performs the first processing operation on the first data based on the first request.

The home UDR n of the first user identifier stores the management data corresponding to the first user identifier. The first data belongs to the management data corresponding to the first user identifier. After receiving the first request sent by the global UDR 0, the home UDR n may perform the first processing operation on the first data. It can be learned from the foregoing description that the first processing operation may be a query operation, an update operation, or the like.

406: The UDR n sends a response to the first request to the UDR 0.

After completing the first processing operation on the first data, the home UDR n may send the response to the first request to the global UDR 0, to send a processing result of the first processing operation to the global UDR 0.

For example, if the first processing operation indicated by the first request is a traffic quota query operation, the home UDR may feed back a traffic quota query result to the global UDR 0 in the response to the first request.

For another example, if the first processing operation indicated by the first request is a replacement operation for the location information, the home UDR may feed back, to the global UDR 0 in the response to the first request, notification information that the location information is successfully replaced.

407: The UDR 0 sends the response to the first request to the UDR 1.

The global UDR 0 may forward the response to the first request to the visited UDR 1, to notify the visited UDR 1 of the processing result of the first processing operation.

408: The UDR 1 sends the response to the first request to the management and control network element 1, where the response to the first request is used by the management and control network element 1 to process the service corresponding to the first user identifier.

The visited UDR 1 may forward the response to the first request to the visited management and control network element 1, to notify the visited management and control network element 1 of the processing result of the first processing operation, so that the management and control network element 1 processes the service corresponding to the first user identifier.

409: The management and control network element 1 processes, based on the response to the first request, the service corresponding to the first user identifier.

The visited management and control network element 1 processes, based on the response to the first request, the service corresponding to the first user identifier. For example, the service initiated by the mobile user 1 is an authentication service. In this case, the first data may include authentication data in the user data corresponding to the first user identifier, and the first processing operation is querying the authentication data. The management and control network element 1 may process the authentication service based on the found authentication data, to verify validity of accessing a network by the terminal.

Optionally, refer to FIG. 4. The data processing method may further include the following steps.

410: The management and control network element 1 sends a response to the service request to the terminal.

The management and control network element 1 may send the response to the service request to the terminal through the transfer device, so that the terminal, a terminal user, or the transfer device may learn of a service processing result. For a description of the transfer device, refer to the related description in step 401.

According to the solution described in steps 401 to 410, in a non-local roaming scenario, when initiating a mobile communications service in a visited location, a mobile user may access a nearby local management and control network element in the visited location. The local management and control network element in the visited location requests a local unified data repository network element in the visited location to perform a processing operation on management data of the mobile user. The local unified data repository network element in the visited location requests, by using routing information stored in a global unified data repository network element, a local unified data repository network element in a home location to perform the processing operation, and returns a response result returned by the local unified data repository network element in the home location to the local management and control network element in the visited location. After receiving the response result, the local management and control network element in the visited location processes the service of the mobile user.

In this way, the mobile user may directly process the service nearby in the visited location, and does not need to migrate the service back to the home location for processing as in the conventional technology. The visited unified data repository network element may directly access the home unified data repository network element through a global route, without routing to the home location through a plurality of hops as in the conventional technology and without manual pre-configuration of the routing information on gateways at various levels. Therefore, according to the technical solution provided in embodiments of this application, in the non-local roaming scenario, the mobile user can perform access in the visited location nearby and process the service. In this way, a service processing procedure is simplified, service processing efficiency is improved, and a manual configuration operation is reduced, so that the mobile user can conveniently and efficiently use the mobile communications service in a non-local location.

In some embodiments of this application, the global UDR may alternatively store management data of a mobile user in each region, that is, store backups of management data of all mobile users on the entire network, so that redundancy assurance can be provided when the local UDR is faulty. Therefore, after the home UDR performs an update operation (for example, an insertion, replacement, or deletion operation) on first data in management data corresponding to a first user identifier of a mobile user, the home UDR may further notify the global UDR to update the stored management data.

To be specific, if the first processing operation is an update operation, as shown in FIG. 4, after step 406, the method may further include the following steps.

411: The UDR n sends synchronization information to the UDR 0.

If the home UDR n performs the update operation on the first data, the home UDR n may send the synchronization information to the global UDR 0, to indicate to update the first data in the management data that corresponds to the first user identifier and that is stored in the UDR 0.

412: The UDR n updates the first data in the stored management data based on the synchronization information.

In this way, when the first data in the home UDR n is updated, the global UDR 0 may be automatically and synchronously indicated to update the first data, to ensure consistency between the first data stored in the home UDR n and the first data stored in the global UDR 0.

The foregoing is described by using an example in which the first data is processed. If other management data in the home UDR n of the first user identifier is updated, the home UDR n may also automatically and synchronously indicate the global UDR 0 to perform an update, so that the management data stored in the home UDR n is automatically consistent with the management data stored in the global UDR 0.

It may be understood that, if management data in any local UDR is updated, the local UDR may also automatically and synchronously indicate the global UDR to perform an update, to ensure consistency between the management data stored in the local UDR and the management data stored in the global UDR.

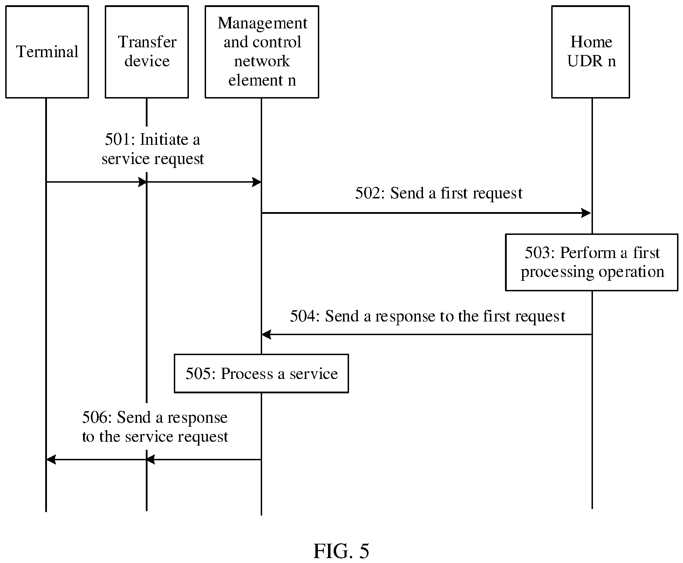

In the mobility management system provided in embodiments of this application, if a service request is initiated in a home location, a home management device group may directly process a service. As shown in FIG. 5, a corresponding data processing method in this case may include the following steps.

501: A terminal initiates a service request of a mobile communications service to a management service network element n.

The terminal in a home location region n may initiate the service request to the home management service network element n through a transfer device, where the mobile communications service corresponds to a first user identifier of a mobile user 1 corresponding to the terminal. For example, the mobile communications service may be a browser access service.

502: The management and control network element n sends a first request to a UDR n based on the service request, where the first request is used to request to perform a first processing operation on first data corresponding to the first user identifier, and the first data is associated with the service corresponding to the first user identifier.

The home management and control network element n performs service analysis based on the service request from the terminal, and determines the to-be-processed first data associated with the service and the first processing operation to be performed on the first data, to generate the first request, so as to request to perform the first processing operation on the first data. Then, the home management and control network element n sends the first request to the home UDR n, to request to perform the first processing operation on the first data.

503: The UDR n performs the first processing operation on the first data based on the first request.

The home UDR n stores management data corresponding to the first user identifier. After receiving the first request from the home management and control network element n, the home UDR n performs the first processing operation on the first data, in the management data, that is indicated by the first request.

It should be noted that if the first processing operation is an update operation, after performing the update operation on the first data, the home UDR n may further notify a global UDR 0 to perform a synchronous update. Details are not described herein.

504: The UDR n sends a response to the first request to the management and control network element n, where the response to the first request is used by the management and control network element n to process the service corresponding to the first user identifier.

After completing the first processing operation on the first data, the home UDR n may send the response to the first request to the home management and control network element n, to send a processing result of the first processing operation to the home management and control network element n.

505: The management and control network element n processes, based on the response to the first request, the service corresponding to the first user identifier.

After receiving the response to the first request from the UDR n, the home management and control network element n may process the service.

506: The management and control network element n sends a response to the service request to the terminal.

After processing the service, the home management and control network element n may send the response to the service request to the terminal through the transfer device, so that the terminal, a terminal user, or the transfer device may learn of a service processing result.

In the solution described in steps 501 to 506, the mobile user in the home location may directly access the UDR n in the home location region, to perform the processing operation on the management data corresponding to the mobile user, and process the service initiated by the mobile user.

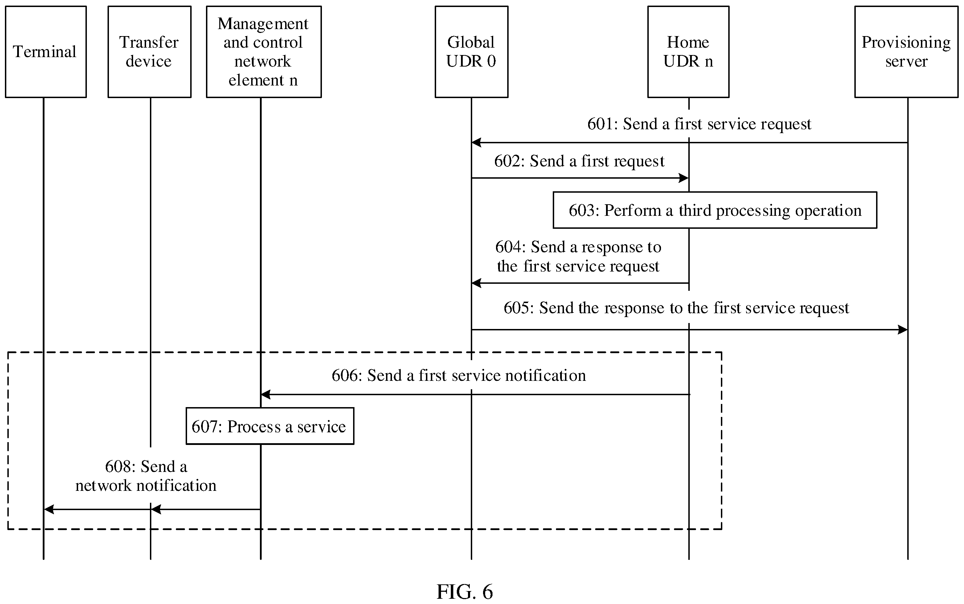

In some embodiments of this application, the home UDR may process a service initiated by a provisioning server in each region. Refer to FIG. 6. A corresponding data processing method in this case may include the following steps.

601: The provisioning server sends a first service request corresponding to the first user identifier to the UDR 0.

An operator staff member in any region may initiate a service corresponding to the first user identifier, for example, a mobile communications service such as user deregistration, card deregistration, or package change, to the provisioning server through a client in a customer service center. The provisioning server sends the first service request of the service corresponding to the first user identifier to the global UDR 0.

Each provisioning server may access a mobility management network through the global UDR 0. A home provisioning server, a visited provisioning server, or a provisioning server in any region may initiate the service corresponding to the first subscriber identifier, and send the corresponding first service request to the global UDR 0.

In other words, regardless of which region the home location of the first user identifier is in and which region a terminal user is currently located in, the service may be processed by using a provisioning server in the current region anytime and anywhere.

602: The UDR 0 sends the first service request to the UDR n.

After receiving the first service request from the provisioning server, the global UDR 0 may forward the first service request to the home UDR n based on stored global routing information, so that the home UDR n processes the first service request.

603: The UDR n performs, based on the first service request, a third processing operation on third data corresponding to the first user identifier, where the third data is associated with the service corresponding to the first user identifier.

The third data belongs to the management data corresponding to the first user identifier. The home UDR n determines, based on the first service request, the to-be-processed third data and the third processing operation to be performed on the third data. The third processing operation may be a query operation or an update operation.

It should be noted that if the third processing operation is an update operation, after performing the update operation on the third data, the home UDR n may further indicate the global UDR 0 to perform a synchronous update. Details are not described herein.

604: The UDR n sends a response to the first service request to the UDR 0.

After performing, based on the first service request, the third processing operation on the third data corresponding to the first user identifier, the home UDR n may send the response to the first service request to the global UDR 0, to notify the global UDR 0 of a processing result.

605: The UDR 0 sends the response to the first service request to the provisioning server.

The global UDR 0 may forward the response to the first service request from the home UDR n to the provisioning server, so that the provisioning server learns of the processing result. Subsequently, the provisioning server may further notify the management personnel of the operator of the processing result through the client.

Optionally, after step 603, the method may further include the following steps.

606: The UDR n sends a first service notification to the management and control network element n.

Some first services initiated by the provisioning server need to be processed by the home management and control network element n. Therefore, after step 603, the home UDR n may send the first service notification to the home management and control network element n, to indicate the management and control network element n to perform related service processing.

607: The management and control network element n processes the service based on the first service notification.

The home management and control network element n performs related service processing after receiving the first service notification.

608: The management and control network element n sends a network notification to the terminal.

After processing the service, the home management and control network element n may further send the network notification to the terminal through the transfer device, so that the terminal, the user, or the transfer device learns of information related to service processing or data processing. For example, if the provisioning server indicates the home UDR n to update location information in the management data, the home management and control network element n may return updated location information to the transfer device like an access network device, the terminal, or the like, so that the access network device or the terminal may perform subsequent processing based on the updated location information.

In other words, according to the solution described in steps 601 to 608, a service request sent by the provisioning server in any region may be processed, and the terminal user may process a service anytime and anywhere by using the provisioning server in any region. Even in a case of non-local roaming, the terminal user may directly access the home UDR through the visited provisioning server by using the global routing information provided by the global UDR, to directly process the service. However, in the conventional technology, the terminal and the terminal user can only perform the service by using the home provisioning server, the home UDR, and the like after returning to the home location. It can be learned that according to the solution provided in this embodiment of this application, a service can be conveniently and quickly processed in a non-local location anytime and anywhere.

In addition, because a provisioning server in each region may access the global UDR in a single-point access manner, an interconnection to the provisioning server may be simplified. Furthermore, the operator may maintain management data of mobile users in an entire group of the operator through the provisioning server in any region. This facilitates number segment management (for example, mobile number management) of mobile users on the entire network.

In some embodiments of this application, UDRs in different regions may conveniently migrate management data. For example, management resources such as storage of the home location of the mobile user 1 are insufficient, and management data of some mobile users such as the mobile user 1 needs to be migrated to another region. For another example, after a card is non-locally reissued, management data in a home location may be migrated to a visited location, or card data of a new card in a card reissuing region may be migrated to the home location, to facilitate management of management data of a mobile user after card reissuing.

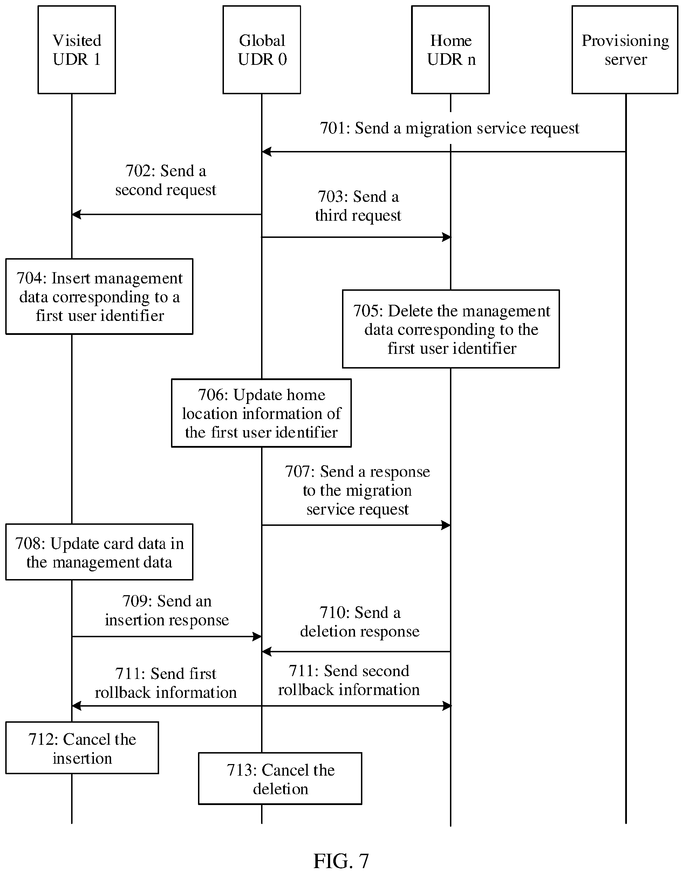

An example in which the management data of the first user identifier corresponding to the mobile user 1 is migrated is used for description. As shown in FIG. 7, a data processing method provided in this embodiment of this application may include the following steps.

701: The provisioning server sends a migration service request corresponding to the first user identifier to the UDR 0.

The provisioning server may be a home provisioning server or a provisioning server in any region. The migration service request may be used to indicate to migrate the management data corresponding to the first user identifier from the home region n to a region 1.

702: The UDR 0 sends a second request to a UDR 1 based on the migration service request, where the second request is used to indicate to insert the management data corresponding to the first user identifier.

The global UDR 0 determines, based on the migration service request, to insert the management data corresponding to the first user identifier into the UDR 1 in the in-migration region 1, and deletes the management data corresponding to the first user identifier stored in the out-migration region n.

Therefore, the global UDR 0 may determine, based on the stored global routing information, the UDR 1 corresponding to the region 1 and the UDR n corresponding to the region n, and separately send the corresponding second request and a corresponding third request to the UDR 1 and the UDR n.

703: The UDR 0 sends the third request to the UDR n based on the migration service request, where the third request is used to indicate to delete the management data corresponding to the first user identifier.

704: The UDR 1 inserts, based on the second request, the management data corresponding to the first user identifier.

The UDR 1 in the in-migration region 1 inserts the management data corresponding to the first user identifier in response to the second request.

705: The UDR n deletes, based on the third request, the management data corresponding to the first user identifier.

The UDR n in the out-migration region n deletes the management data corresponding to the first user identifier in response to the third request.

706: The UDR 0 updates home location information of the first user identifier, where updated home location information of the first user identifier corresponds to the UDR 1.

After migrating the management data corresponding to the first user identifier, the global UDR 0 may further update the home location information of the first user identifier, so that the first user identifier in the global routing information stored in the global UDR 0 can correspond to the home location information in real time.

707: The UDR 0 sends a response to the migration service request to the provisioning server.

After the migration is complete, the global UDR 0 may notify the provisioning server of a migration completion result through the response to the migration service request.

According to the solution described in steps 701 to 707, the provisioning server in any region may migrate, through the global UDR 0, management data that is of a mobile user and that is stored in a UDR in a region to a UDR in another region for management and maintenance.

A user identification card (for example, a SIM card, a USIM card, or an eSIM card) used by the mobile user may be damaged or lost. In the non-local card reissuing scenario, the out-migration region may be the home location, and the in-migration region may be the visited location or the card reissuing region. After card reissuing, the card data of the new card is usually different from that of an old card. The card data may include authentication data in user data, for example, information such as an IMSI, a KI, or a K4 of the SIM/USIM card of the user. Therefore, after step 704, the method may further include the following step.

708: The UDR 1 updates the card data in the management data.

The UDR 1 in the in-migration region may update the card data in the inserted management data, to update the card data of the old card to the card data of the new card, so that the management data of the first user identifier can respond to a current card state in real time.

It may be understood that, after updating the card data, the UDR 1 may further indicate the global UDR 0 to perform notification update.

In this way, in the non-local card reissuing scenario, the new card may have card data such as an IMSI of the visited location (or referred to as the card reissuing region), and the provisioning server may migrate, through the global UDR 0, the management data that is of the mobile user and that is stored in the home UDR n to the visited UDR 1, so that both the management data and the card data of the mobile user 1 correspond to a same region, namely, the visited location.

However, in the conventional technology, when mobile communications networks are separately deployed by province, an IMSI of the home location is required for card reissuing, and processing may be performed in a manner of remote card burning, or the card is reissued locally in the home location. Therefore, an existing card reissuing procedure is not easy to operate.

Further, after step 704, the method may include the following step.

709: The UDR 1 sends an insertion response to the UDR 0, to indicate whether the insertion is successful.

If the UDR 1 successfully inserts the management data corresponding to the first user identifier, the insertion response is an insertion success response. If the UDR 1 fails to insert the management data corresponding to the first user identifier, the insertion response is an insertion failure response.

After step 705, the method may further include the following step.

710: The UDR n sends a deletion response to the UDR 0, to indicate whether the deletion is successful.

If the UDR n successfully deletes the management data corresponding to the first user identifier, the deletion response is a deletion success response. If the UDR n fails to delete the management data corresponding to the first user identifier, the deletion response is a deletion failure response.

Optionally, the method may further include the following steps.

711: After receiving the deletion failure response from the third UDR or the insertion failure response from the first UDR, the UDR 0 sends first rollback information to the first UDR, and sends second rollback information to the third UDR.

If the UDR 1 in the in-migration region fails to perform insertion or the UDR n in the out-migration region fails to perform deletion, the UDR 0 indicates the UDR and the UDR n to roll back data, to restore the data to a state before the migration.

712: The UDR 1 cancels, based on the first rollback information, the operation of inserting the management data corresponding to the first user identifier.

The UDR 1 in the in-migration region cancels the insertion operation based on the first rollback information to restore to the state before the migration.

713: The UDR n cancels, based on the second rollback information, the operation of deleting the management data corresponding to the first user identifier.

The UDR n in the out-migration region cancels the deletion operation based on the second rollback information to restore to the state before the migration.

In other words, when an error occurs in the migration, the migration operation may be canceled, to ensure accuracy and reliability of the management data stored in the mobility management system.

It may be understood that, when there is another update operation, if the update operation fails, a data rollback operation may be performed, to restore the data to a state before the update, thereby ensuring accuracy and reliability of the management data stored in the mobility management system. Details are not described herein.

Optionally, after card migration or user data migration, the global UDR 0 may further send a network notification to a terminal or a transfer device in the in-migration region, to notify the terminal, the transfer device, or a terminal user of information related to corresponding service processing or data processing after the migration, so that these devices perform subsequent processing based on the related information in the network notification. For example, the network notification may include new location information, new quota information, or the like in the inserted management data.

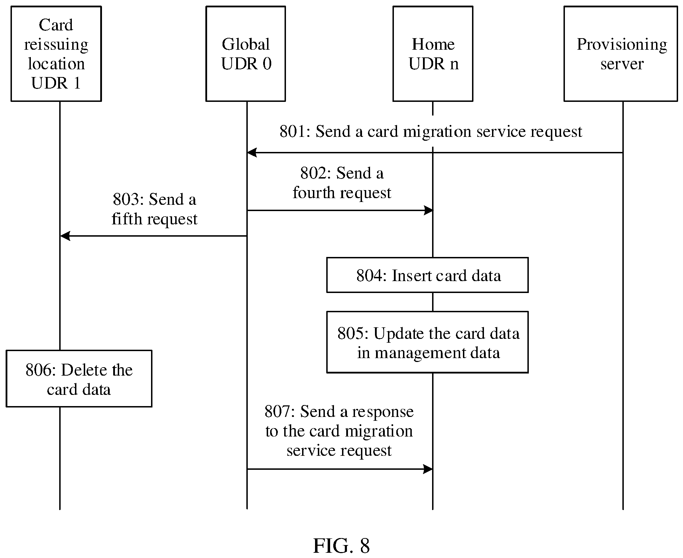

In the non-local card reissuing scenario, as shown in FIG. 8, a card data migration procedure may include the following steps.

801: The provisioning server sends a card migration service request corresponding to the first user identifier to the UDR 0.

The provisioning server may be a home provisioning server or a provisioning server in any region. The migration service request may be used to indicate to migrate the card data corresponding to the first user identifier from the region 1 of the visited location (or referred to as the card reissuing region) to the home region n.

802: The UDR 0 sends a fourth request to the UDR n based on the card migration service request, where the fourth request is used to indicate to insert the card data in the management data corresponding to the first user identifier.

The global UDR 0 determines, based on the card migration service request, to insert the management data corresponding to the first user identifier into the UDR n in the in-migration region n, and sends the corresponding fourth request to the UDR n.

Optionally, the method may further include step 803.

803: The UDR 0 sends a fifth request to the UDR 1 based on the card migration service request, where the fifth request is used to indicate to delete the card data in the management data corresponding to the first user identifier.

The global UDR 0 indicates, based on the card migration service request, the UDR 1 in the out-migration region to delete the card data, and sends the corresponding fifth request to the UDR 1.

804: The UDR n inserts the card data corresponding to the first user identifier.

805: The UDR n updates the card data in the management data corresponding to the first user identifier.

After inserting the card data corresponding to the first user identifier, the home UDR n deletes the card data of the old card from the original management data. In other words, the home UDR n updates the original card data to the card data of the new card, so that the management data corresponds to a current card state in real time.

It may be understood that, after updating the card data, the home UDR n may further indicate the global UDR 0 to update the card data in the stored management data corresponding to the first user identifier, so that the management data in the home UDR n is consistent with the management data in the global UDR 0.

806: The UDR 1 deletes, based on the fifth request, the card data corresponding to the first user identifier.

In addition, if the operation in step 804 or step 805 fails, the UDR n and the UDR 1 may further perform data rollback, to restore to the state before the migration.

807: The UDR 0 sends a response to the card migration service request to the provisioning server.

After the card data migration is complete, the global UDR 0 may notify the provisioning server of a migration completion result by using the response to the card migration service request.

In this way, in the non-local card reissuing scenario, the provisioning server may migrate, through the global UDR 0, the card data of the mobile user stored on the UDR 1 in the card reissuing region to the home UDR n, so that the management data of the mobile user 1 maintained in the home location corresponds to the card state in real time.

The foregoing embodiments are data processing procedures implemented on a basis that the home UDR stores the management data of the first user identifier, and the global UDR 0 stores routing information of the mobile user.

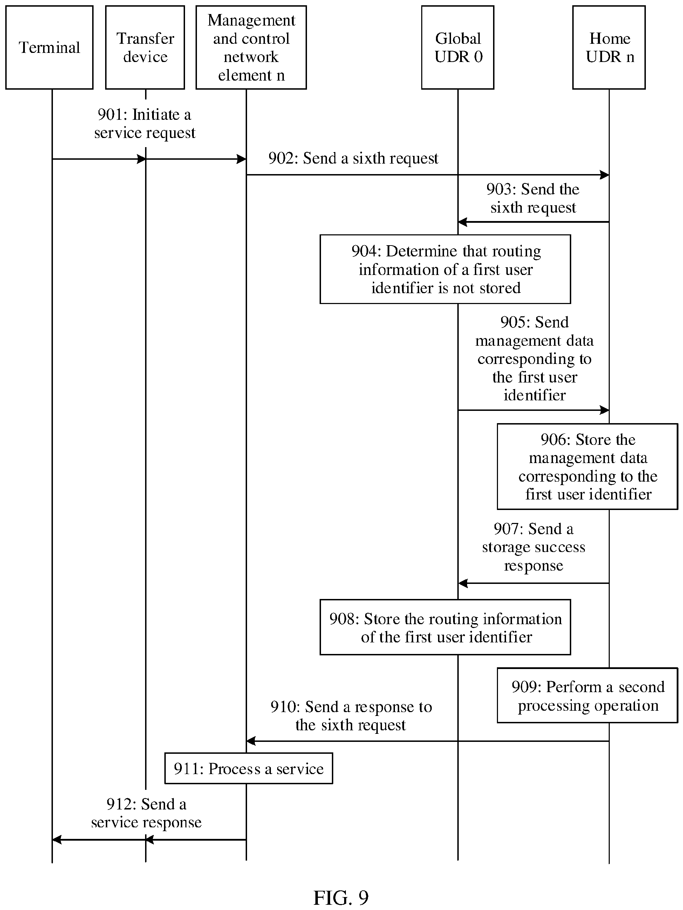

Initially, the global UDR 0 stores the management data of the first user identifier, but does not store the routing information corresponding to the home location of the first user identifier. When the mobile user 1 accesses the network for the first time, the global UDR 0 automatically learns of the home location of the first user identifier, and stores the routing information of the first user identifier. A region in which the mobile user 1 is located when accessing the network for the first time is the home location of the mobile user 1. Initially, the UDR n does not store the management data of the first user identifier of the mobile user 1, and the UDR n needs to download the management data of the first user identifier from the global UDR 0. In other words, before the steps shown in the foregoing embodiments, as shown in FIG. 9, the method may further include the following steps.

901: The terminal initiates the service request of the mobile communications service to the management and control network element n.

The terminal in the region n may initiate the service request corresponding to the first user identifier to the management and control network element n in the region n for the first time through the transfer device, and the mobile user 1 corresponding to the first user identifier accesses the network for the first time. For example, the mobile communications service initiated by the terminal to the management and control network element n is a network access service.

902: The management and control network element n sends a sixth request to the UDR n, where the sixth request is used to request to perform a second processing operation on second data corresponding to the first user identifier, and the second data is associated with the service corresponding to the first user identifier.

The second data belongs to the management data corresponding to the first user identifier. The management and control network element n determines, based on the service request initiated by the terminal, the to-be-processed second data and the second processing operation to be performed on the second data, generates the sixth request, and sends the sixth request to the UDR n. The second processing operation may be a query operation or an update operation.

903: The UDR n sends the sixth request to the UDR 0.

The UDR n forwards the sixth request from the management and control network element n to the global UDR 0.

904: The UDR 0 determines that the home location information of the first user identifier is not stored.

The global UDR 0 determines that the home location information of the first user identifier is not stored, that is, the routing information of the first user identifier is not stored, and it is possible that the mobile user 1 accesses the network for the first time currently.

905: The UDR 0 sends the management data corresponding to the first user identifier to the UDR n.

When the global UDR 0 does not store the home location information of the first user identifier, it is possible that the mobile user 1 accesses the network for the first time currently, and the UDR n is a network element corresponding to the home location of the mobile user 1 when the mobile user 1 accesses the network for the first time. Therefore, the management data corresponding to the first user identifier may be sent to the UDR n for storage.

906: The UDR n stores the management data corresponding to the first user identifier.

After the UDR n successfully stores the management data of the first user identifier, the region in which the UDR n is located is the home location of the first user identifier, and the UDR n is the home UDR of the first user identifier.

907: The UDR n sends a management data storage success response to the UDR 0.

After successfully storing the management data, the UDR n may further notify the global UDR 0 that the management data is successfully stored.

908: The UDR 0 stores a correspondence between the first user identifier and the home location information, where the home location information corresponds to the UDR n.

After learning that the UDR n successfully stores the management data corresponding to the first user identifier, the global UDR 0 may establish the correspondence between the first user identifier and the home location information, that is, store the routing information of the first user identifier.

In other words, the global UDR 0 may automatically learn of and store the routing information of the user identifier, so that a local UDR can directly access the home UDR of the user identifier based on the routing information stored in the global UDR 0. In this way, local UDRs can be interconnected on the entire network without manual configuration of the routing information, and therefore a manual configuration operation can be reduced.

After step 906, the management data corresponding to the first user identifier stored in the home UDR n may be used to process the service initiated by the terminal. Refer to FIG. 9. The method may further include the following steps.

909: The UDR n performs the second processing operation on the second data.

The home UDR n performs the second processing operation on the second data in the management data in response to the sixth request. The second processing operation may be a query operation, an update operation, or the like.

910: The UDR n sends a response to the sixth request to the management and control network element n.

The home UDR n returns a result of the second processing operation to the management and control network element n by using the response to the sixth request.

911: The management and control network element n processes the service.

912: The management and control network element n sends a service response to the terminal.

The home management and control network element n processes, based on the response to the sixth request, the service initiated by the terminal, and sends the service response to the terminal through the transfer device.

After the home UDR n stores the management data corresponding to the first user identifier, and the global UDR 0 stores the routing information of the first user identifier, devices in the mobility management system may perform the data processing procedures shown in FIG. 4 to FIG. 8.

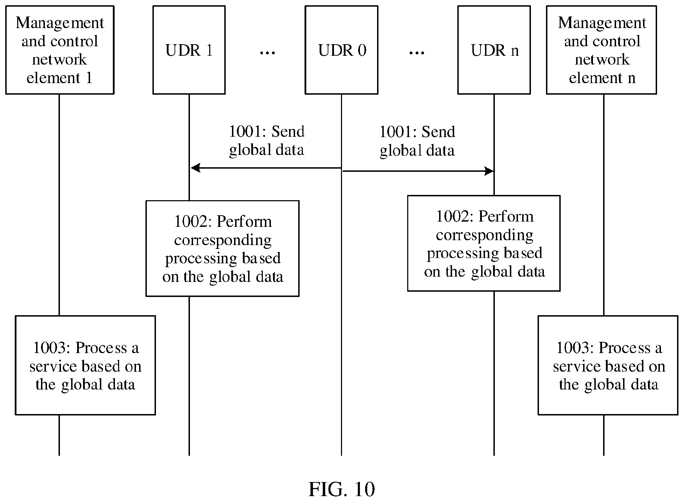

In the mobility management system provided in embodiments of this application, a global management device group has functions of network-wide management, global configuration, and global control. The global UDR 0 may distribute global data that is uniformly formulated by the operator to each local UDR, so that collaborative processing, data management, or information update is automatically performed in each region based on global information. To be specific, refer to FIG. 10. The data processing method provided in embodiments of this application may further include the following steps.

1001: The UDR 0 sends the global data to each local UDR.

The global data may be set by the operator on the global UDR 0 and sent to each local UDR through the global UDR 0. The operator may alternatively trigger the global UDR 0 through the provisioning server, to send the global data to each local UDR. The operator may alternatively trigger the global UDR 0 through a management and control network element 0 corresponding to the global UDR 0, to send the global data to each local UDR.

For example, the global data may be service policy configuration information (for example, policy information of a universal package used in each region). For another example, the global data may be data information that is uniformly formulated by the operator and used by each region, for example, a region number.

1002: Each local UDR performs corresponding processing based on the global data.

Each local UDR may perform corresponding processing such as storage, data update, or coordination based on the global data sent by the global UDR 0. In other words, the operator may uniformly formulate the global data and use the global UDR 0 to make the global data take effect in each region at the same time.

For example, the global data is data information that is uniformly formulated by the operator and used by each region. The global UDR 0 may distribute, in a timely and fast manner, a newly added, newly formulated, or updated region number to each local UDR for storage and use.

For another example, the global data is service policy configuration information uniformly formulated by the operator. The global UDR 0 may distribute, in a timely and fast manner, newly added, newly formulated, or updated service policy configuration information to each local UDR, so that each local UDR stores and uses the global data and cooperates with each other, instead of independently decomposing and executing a service policy uniformly configured by the operator in each region as in the conventional technology.

Optionally, refer to FIG. 10. The method may further include the following steps.

1003: A management and control network element in each region processes a service based on the global data provided by the UDR in the region.

For example, the global data may be service policy configuration information, and the management and control network element in each region may process the service based on a rule described in the service policy configuration information, and collaborate with another region. For example, the service policy configuration information may be used to implement services such as package sharing, quota sharing, or package universality between regions.

For example, the global UDR 0 may deliver a policy rule for inter-region quota sharing to each local UDR. Each local UDR collaborates with each other based on the policy rule. For example, the mobile user 1 and a mobile user 2 are associated users and subscribe to a traffic quota sharing service package with a traffic quota of 30 G. The mobile user 1 uses a traffic value a in the region 1 by using a terminal. The management and control network element 1 and the UDR 1 in the region 1 deduct the traffic value a from 30 G in real time based on the policy rule for inter-region quota sharing, and notify a UDR 2 in a region 2 of the mobile user 2. The UDR 2 and a management and control network element 2 in the region 2 determine, based on the policy rule for inter-region quota sharing, that a current remaining traffic value is 30 G - a. If the mobile user 2 uses a traffic value b in the region 2 by using a terminal 2, the management and control network element 2 and the UDR 2 in the region 2 deduct the traffic value b from 30 G - a in real time based on the policy rule for inter-region quota sharing, and notify the UDR 1 in the region 1 of the mobile user 1. The UDR 1 and the management and control network element 1 in the region 1 determine, based on the policy rule for inter-region quota sharing, that a current remaining traffic value is 30 G - a - b.

For another example, the global UDR 0 may deliver a policy rule for inter-region package universality to each local UDR. Each local UDR collaborates with each other based on the policy rule. For example, the mobile user 1 subscribes to an inter-region universal package, and a download speed corresponding to the package is 20 Mbit/s. The mobile user 1 accesses network data at a speed of 20 Mbit/s in the home location region n by using the terminal. The mobile user 1 accesses the network data in the visited region 1 by using the terminal. The management and control network element 1 and the UDR 1 in the region 1 allow, based on the policy rule for inter-region package universality, the mobile user 1 to also use the 20 Mbit/s download speed corresponding to the package in the visited region 1.

It should be noted that the operator may also update the management data corresponding to the user identifier by using the global UDR, and synchronously indicate the home UDR of the user identifier to update the management data. Alternatively, the operator may update other stored data by using the global UDR, and synchronously indicate the local UDR to update the corresponding data.

In other words, the update operation may be initiated by the home UDR, and the global UDR is an update responder; or the update may be initiated by the global UDR, and the local UDR is an update responder. An update between the local and the global may include two modes: a synchronous update and an asynchronous update. The synchronous update means that both an initiator and a responder need to perform an update successfully. If the responder fails to perform an update, the entire update operation fails, and the initiator also fails to perform an update. In this case, the initiator may further perform data rollback, to restore to a state before the update. The asynchronous update means that an update performed by an initiator is independent of that performed by a responder. An update failure of the responder does not affect an update result of the initiator.

In addition, in embodiments of this application, to further ensure data consistency between the global UDR and the local UDR, data consistency verification may further be performed between the global UDR and the local UDR. For example, the global UDR may initiate forward verification to the local UDR. The local UDR may initiate reverse verification to the global UDR. The forward verification may enable the local UDR to automatically restore data that is unavailable in the local UDR but available in the global UDR. The reverse verification may enable the global UDR to delete data that is not available in the local UDR. Forward verification and reverse verification may be performed periodically and continuously. Through forward verification and reverse verification, inconsistent data between a local side and a global side may be detected in a timely manner, and the inconsistent data may be processed and automatically restored as soon as possible, to ensure real-time consistency between data stored at the local side and data stored at the global side.

In addition, because a mobile communications system in each region in the conventional technology is an independent subnet, a new service uniformly planned by the operator needs to be managed manually, planned in a coordinated manner, and executed in each province (region) independently. Consequently, operation costs are high, and a time to marketing period of a service is long. The existing solution has at least the following problems:
(1) Product catalogs on a management and control network element are not unified. The operator uniformly formulates policies and services, and the policies and the services are decomposed and executed in each region in a time-based manner. A plurality of product catalog management nodes and policy configuration nodes are involved, and time to marketing (time to marketing, TTM) of a new service is long. For example, to provide services such as campus and private line services, a plurality of vendors need to separately define control policies and rating logic for management and control network elements in 31 provinces. TTM of a centralized procurement mode is longer than one year.
(2) Number segment management of mobile users is complicated. For example, IMSI and MSISDN number segments of the mobile users need to be managed in a strong match manner based on home locations, and a strong match relationship needs to be ensured. The management is complicated, and number resources cannot be shared. For example, in a non-local card reissuing scenario, if a non-local roaming card is lost, the card has to be reissued in a non-local location. However, based on province-based separated deployment, an IMSI of a home location needs to be used.
(3) Cross-province package sharing is difficult. Enterprises in a 2B scenario do not support cross-province package and quota sharing. Family packages or personal wearables in a 2C scenario do not support package and quota sharing.

For the mobility management network provided in embodiments of this application, the entire network may be managed and controlled through the global management device group, to implement collaboration between regions. Compared with the conventional technology, the solutions provided in embodiments of this application can implement at least the following functions:
(1) Number segment management is simplified and signaling is accessed nearby. There is no strict number segment homing requirement on mobile users, and direct and fast global routing is supported for the mobile users.
(2) The provisioning server accesses the global management device group in a single-point access manner, and management data of the mobile users on the entire network may be maintained. Services such as packages provided by the operator may be configured to take effect in all regions at the same time. In addition, an interconnection to the provisioning server and number segment management may further be simplified.
(3) Cross-province package sharing and non-local card reissuing are supported, and a non-local card reissuing procedure is simple and easy to implement.
(4) High reliability. Regional and regional cross-geographic network redundancy is used.
(5) Data stored in a UDR may include a plurality of types of slice data, and the slice data may be uniformly managed by using the global management device group, so that the slice data can be downloaded and scaled as required.

It should be noted that the foregoing embodiments are described by using the mobility management system based on the 5G network architecture shown in FIG. 2D and the network elements in the mobility management system as examples. For a mobility management system based on another network architecture and a network element in the mobility management system, data processing may also be performed by using the method provided in embodiments of this application. Details are not described herein again.

In some other embodiments, the global routing information stored in the global UDR may alternatively be pre-configured information. In this case, the mobile user in the visited location may directly access the same data repository network element in the home location based on the global routing information, to process the service nearby in the visited location, without migrating the service back to the home location for processing as in the conventional technology. This may simplify a service processing procedure in the non-local roaming scenario, and improve service processing efficiency, so that the mobile user can conveniently use the mobile communications service in a non-local location.

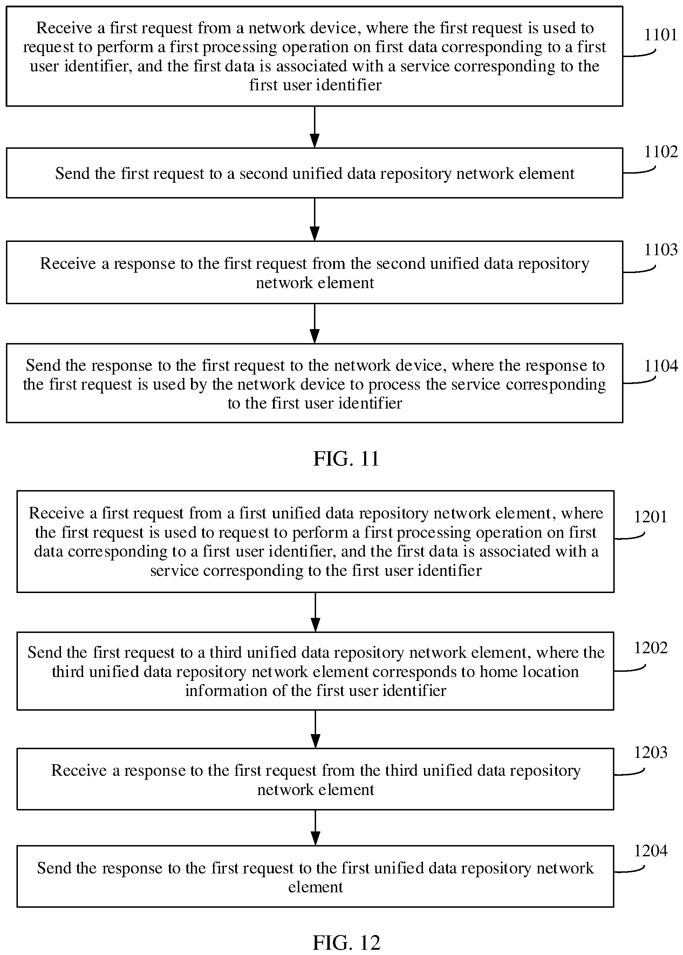

In conclusion, an embodiment of this application discloses a data processing method, and the method may be applied to a visited unified data repository network element. As shown in FIG. 11, the method includes the following steps.

1101: A first unified data repository network element receives a first request from a network device, where the first request is used to request to perform a first processing operation on first data corresponding to a first user identifier, and the first data is associated with a service corresponding to the first user identifier.

1102: The first unified data repository network element sends the first request to a second unified data repository network element.

1103: The first unified data repository network element receives a response to the first request from the second unified data repository network element.

1104: The first unified data repository network element sends the response to the first request to the network device, where the response to the first request is used by the network device to process the service corresponding to the first user identifier.

In the foregoing data processing method, for example, for an operation of the first unified data repository network element, refer to the operation of the UDR 1 and the related description in the embodiment shown in FIG. 4, or refer to the operation of the UDR 1 and the related description in the embodiment shown in FIG. 7, FIG. 8, or FIG. 10. Details are not described herein again.

In the foregoing data processing method, when initiating a mobile communications service in a visited location, a mobile user may access a nearby local management and control network element in the visited location. The local management and control network element in the visited location requests a local unified data repository network element in the visited location to perform a processing operation on management data of the mobile user. The local unified data repository network element in the visited location sends the request to a global unified data repository network element, and processes the service of the mobile user based on a request processing result returned by the global unified data repository network element. Therefore, in a non-local roaming scenario, the mobile user may process a service in the visited location nearby. A processing procedure is simple, so that the mobile user can conveniently use the mobile communications service in a non-local location.

In addition, an embodiment of this application further discloses a data processing method, and the method may be applied to a global unified data repository network element. As shown in FIG. 12, the method includes the following steps.

1201: A second unified data repository network element receives a first request from a first unified data repository network element, where the first request is used to request to perform a first processing operation on first data corresponding to a first user identifier, and the first data is associated with a service corresponding to the first user identifier.

1202: The second unified data repository network element sends the first request to a third unified data repository network element, where the third unified data repository network element corresponds to home location information of the first user identifier.

1203: The second unified data repository network element receives a response to the first request from the third unified data repository network element.

1204: The second unified data repository network element sends the response to the first request to the first unified data repository network element.

In the foregoing data processing method, for example, for an operation of the second unified data repository network element, refer to the operation of the UDR 0 and the related description in the embodiment shown in FIG. 4, or refer to the operation of the UDR 0 and the related description in the embodiment shown in FIG. 6 to FIG. 10. Details are not described herein again.

In the foregoing data processing method, the global unified data repository network element may receive a first request, sent by a visited unified data repository network element, that is associated with a service of a mobile user, and route the first request to a home unified data repository network element based on global routing information. The global unified data repository network element forwards a request response returned by the home unified data repository network element to the local unified data repository network element in the visited location, so that the visited unified data repository network element returns the request response to a visited management and control network element for service processing.

Therefore, in a non-local roaming scenario, the visited unified data repository network element can directly access the home unified data repository network element by using routing information provided by the global unified data repository network element, so that the visited management and control network element processes a service based on an access result, without routing to a home location through a plurality of hops as in the conventional technology and without manual pre-configuration of the routing information on gateways at various levels. This may simplify a service processing procedure, improve service processing efficiency, and reduce a manual configuration operation, so that the mobile user can conveniently use a mobile communications service in a non-local location.

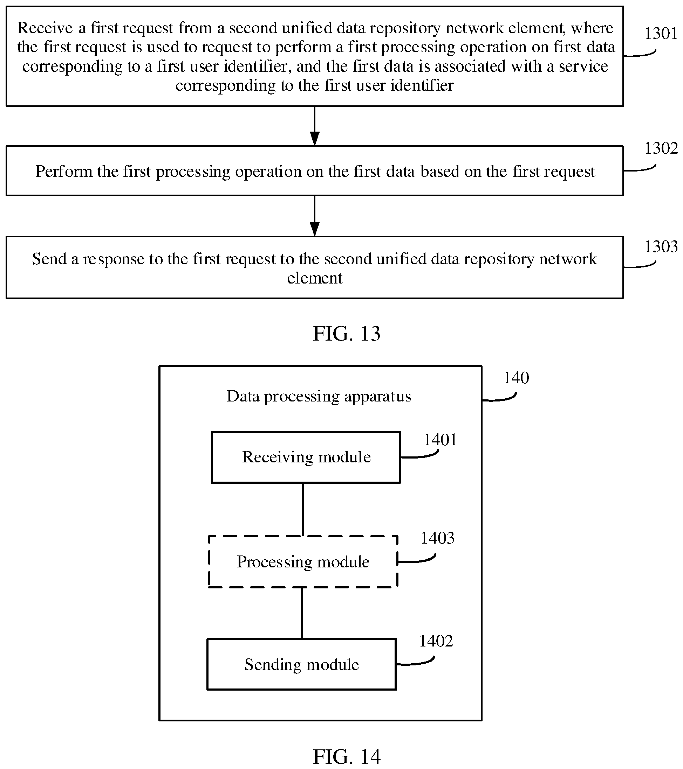

In addition, an embodiment of this application further discloses a data processing method, and the method may be applied to a home unified data repository network element. As shown in FIG. 13, the method includes the following steps.

1301: A third unified data repository network element receives a first request from a second unified data repository network element, where the first request is used to request to perform a first processing operation on first data corresponding to a first user identifier, and the first data is associated with a service corresponding to the first user identifier.

1302: The third unified data repository network element performs the first processing operation on the first data based on the first request.

1303: The third unified data repository network element sends a response to the first request to the second unified data repository network element.

In the foregoing data processing method, for example, for an operation of the third unified data repository network element, refer to the operation of the UDR n and the related description in the embodiment shown in FIG. 4, or refer to the operation of the UDR n and the related description in the embodiment shown in FIG. 5 to FIG. 10. Details are not described herein again.

In the foregoing data processing method, the home unified data repository network element may receive a first request, sent by the global unified data repository network element, that is associated with a service of a mobile user, and perform a processing operation on first data based on the first request. Then, the home unified data repository network element returns a request response to the global unified data repository network element, and the global unified data repository network element forwards the request response to the local unified data repository network element in the visited location, so that a visited management and control network element processes the service.

Therefore, in a non-local roaming scenario, the home unified data repository network element can perform a processing operation based on a service-related request forwarded by the global unified data repository network element, and return a processing result to a visited location for service processing. This may simplify a service processing procedure, so that the mobile user can conveniently use a mobile communications service in a non-local location.

The solutions provided in embodiments of this application are mainly described from a perspective of interaction between network elements. It may be understood that, to implement the foregoing functions, the first unified data repository network element, the second unified data repository network element, the third unified data repository network element, the network device, the terminal, or the transfer device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, function module division may be performed on the first unified data repository network element, the second unified data repository network element, the third unified data repository network element, the network device, the terminal, or the transfer device based on the foregoing method examples. For example, each function module may be divided based on each function, or two or more functions may be integrated in one processing module. The integrated module may be implemented in a form of hardware, or may be implemented in a form of a software function module. It should be noted that, in embodiments of this application, module division is an example and is merely logical function division. There may be another division manner in an actual implementation.

For example, if the function modules are divided through integration, FIG. 14 is a schematic diagram of a structure of a data processing apparatus 140. The data processing apparatus 140 includes a receiving module 1401 and a sending module 1402. In some embodiments, the data processing apparatus 140 further includes a processing module 1403.

In some embodiments, the data processing apparatus 140 is configured to implement the functions of the first unified data repository network element.

The receiving module 1401 may be configured to receive a first request from a network device, where the first request is used to request to perform a first processing operation on first data corresponding to a first user identifier, and the first data is associated with a service corresponding to the first user identifier.

The sending module 1402 may be configured to send the first request to a second unified data repository network element.

The receiving module 1401 may further be configured to receive a response to the first request from the second unified data repository network element.

The sending module 1402 may further be configured to send the response to the first request to the network device, where the response to the first request is used by the network device to process the service corresponding to the first user identifier.

In addition, the receiving module 1401 may further be configured to support the first unified data repository network element in performing the operation of receiving data from another device in the procedure shown in FIG. 7, FIG. 8, or FIG. 10, and/or may be configured in another process of the technology described in this specification.

The sending module 1402 may further be configured to support the first unified data repository network element in performing the operation of sending data to another device, for example, step 709, in the procedure shown in FIG. 7, FIG. 8, or FIG. 10, and/or may be configured in another process of the technology described in this specification.

The processing module 1403 may be configured to support the first unified data repository network element in performing the operations such as step 704, step 708, step 712, step 806, or step 1002 in the procedure shown in FIG. 7, FIG. 8, or FIG. 10, and/or may be configured in another process of the technology described in this specification.

It should be noted that all related content of the steps in the foregoing method embodiments may be cited in function descriptions of corresponding function modules. Details are not described herein again.

The data processing apparatus 140 provided in this embodiment is configured to implement the data processing method performed by the first unified data repository network element. Therefore, an effect same as that of the foregoing implementation methods can be achieved.

In some embodiments, the data processing apparatus 140 is configured to implement the functions of the second unified data repository network element.

The receiving module 1401 is configured to receive a first request from a first unified data repository network element, where the first request is used to request to perform a first processing operation on first data corresponding to a first user identifier, and the first data is associated with a service corresponding to the first user identifier.

The sending module 1402 is configured to send the first request to a third unified data repository network element, where the third unified data repository network element corresponds to home location information of the first user identifier.

The receiving module 1401 is further configured to receive a response to the first request from the third unified data repository network element.

The sending module 1402 is further configured to send the response to the first request to the first unified data repository network element.

In addition, the receiving module 1401 may further be configured to support the first unified data repository network element in performing the operation of receiving data from another device in the procedures shown in FIG. 6 to FIG. 10, and/or may be configured in another process of the technology described in this specification.

The sending module 1402 may further be configured to support the first unified data repository network element in performing the operation of sending data to another device, for example, step 602, step 605, step 702, step 703, step 707, step 711, step 804, step 805, step 807, step 905, or step 1001, in the procedures shown in FIG. 6 to FIG. 10, and/or may be configured in another process of the technology described in this specification.

The processing module 1403 may be configured to support the first unified data repository network element in performing the operations such as step 706, step 713, step 904, or step 908 in the procedures shown in FIG. 6 to FIG. 10, and/or may be configured in another process of the technology described in this specification.

It should be noted that all related content of the steps in the foregoing method embodiments may be cited in function descriptions of corresponding function modules. Details are not described herein again.

The data processing apparatus 140 provided in this embodiment is configured to implement the data processing method performed by the second unified data repository network element. Therefore, an effect same as that of the foregoing implementation methods can be achieved.

In some embodiments, the data processing apparatus is configured to implement the functions of the third unified data repository network element.

The receiving module 1401 is configured to receive a first request from a second unified data repository network element, where the first request is used to request to perform a first processing operation on first data corresponding to a first user identifier, and the first data is associated with a service corresponding to the first user identifier.

The processing module 1403 is configured to perform the first processing operation on the first data based on the first request.

The sending module 1402 is configured to send a response to the first request to the second unified data repository network element.

In addition, the receiving module 1401 may further be configured to support the first unified data repository network element in performing the operation of receiving data from another device in the procedures shown in FIG. 5 to FIG. 10, and/or may be configured in another process of the technology described in this specification.

The sending module 1402 may further be configured to support the first unified data repository network element in performing the operation of sending data to another device, for example, step 504, step 604, step 606, step 710, step 903, step 907, or step 910, in the procedures shown in FIG. 5 to FIG. 10, and/or may be configured in another process of the technology described in this specification.

The processing module 1403 may be configured to support the first unified data repository network element in performing the operations such as step 503, step 603, step 705, step 804, step 805, step 906, step 909, or step 1002 in the procedures shown in FIG. 5 to FIG. 10, and/or may be configured in another process of the technology described in this specification.

It should be noted that all related content of the steps in the foregoing method embodiments may be cited in function descriptions of corresponding function modules. Details are not described herein again.

The data processing apparatus 140 provided in this embodiment is configured to implement the data processing method performed by the third unified data repository network element. Therefore, an effect same as that of the foregoing implementation methods can be achieved.

In this embodiment of this application, the data processing apparatus is presented in a form of function modules obtained through division in an integration manner. The "module" herein may be a specific ASIC, a circuit, a processor that executes one or more software or firmware programs and a memory, an integrated logic circuit, and/or another component that can provide the foregoing functions. In a simple embodiment, a person skilled in the art may figure out that the data processing apparatus may be in a form shown in FIG. 3.

For example, the processor 301 in FIG. 3 may invoke the computer-executable instructions stored in the memory 303, so that the data processing apparatus performs the data processing method in the foregoing method embodiments.

Specifically, functions/implementation processes of the receiving module 1401, the sending module 1402, and the processing module 1403 in FIG. 14 may be implemented by the processor 301 in FIG. 3 by invoking the computer-executable instructions stored in the memory 303. Alternatively, a function/an implementation process of the processing module 1403 in FIG. 14 may be implemented by the processor 301 in FIG. 3 by invoking the computer-executable instructions stored in the memory 303, and functions/implementation processes of the receiving module 1401 and the sending module 1402 in FIG. 14 may be implemented by the communications interface 304 in FIG. 3.

The data processing apparatus provided in this embodiment can perform the foregoing data processing method. Therefore, for a technical effect that can be achieved by the data processing apparatus, refer to descriptions in the foregoing method embodiments. Details are not described herein again.

Another embodiment of this application further provides an apparatus (for example, the apparatus may be a chip system, a component, or a module). The apparatus includes a processor, configured to support a first unified data repository network element, a second unified data repository network element, or a third unified data repository network element in implementing the foregoing data processing method. In a possible design, the apparatus further includes a memory. The memory is configured to store program instructions and data that are necessary for the first unified data repository network element, the second unified data repository network element, or the third unified data repository network element. Certainly, the memory may not be in the apparatus. When the apparatus is a chip system, the apparatus may include a chip, or may include a chip and another discrete component. This is not specifically limited in this embodiment of this application.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the data processing method in the foregoing embodiments.

An embodiment of this application further provides a computer-readable storage medium. The computer-readable storage medium stores computer instructions. When the computer instructions are run on an electronic device, the electronic device is enabled to perform the related method steps, to implement the data processing method in the foregoing embodiments.

An embodiment of this application further provides a computer program product. When the computer program product is run on a computer, the computer is enabled to perform the foregoing related steps, to implement the data processing method performed by the electronic device in the foregoing embodiments.

The electronic device, the computer-readable storage medium, the computer program product, or the chip provided in the embodiments is configured to perform the corresponding method provided above. Therefore, for beneficial effects that can be achieved, refer to the beneficial effects in the corresponding method provided above. Details are not described herein again.

Another embodiment of this application provides a communications system. For an architecture of the communications system, refer to FIG. 2A to FIG. 2D. The communications system may include a first unified data repository network element, a second unified data repository network element, and a third unified data repository network element. The first unified data repository network element and the third unified data repository network element are separately connected to the second unified data repository network element. The first unified data repository network element and the third unified data repository network element separately correspond to different regions. The first unified data repository network element and the third unified data repository network element separately store management data corresponding to different user identifiers. The second unified data repository network element stores routing information of the user identifiers.

The network element in the communications system may be configured to implement the foregoing data processing method. For achieved beneficial effects, refer to the beneficial effects in the corresponding method provided above.

For example, the first unified data repository network element receives a first request from a network device, where the first request is used to request to perform a first processing operation on first data corresponding to a first user identifier, and the first data is associated with a service corresponding to the first user identifier. The first unified data repository network element sends the first request to the second unified data repository network element. The second unified data repository network element sends the first request to the third unified data repository network element, where the third unified data repository network element corresponds to home location information of the first user identifier. The third unified data repository network element performs the first processing operation on the first data. The third unified data repository network element sends a response to the first request to the second unified data repository network element. The second unified data repository network element sends the response to the first request to the first unified data repository network element. The first unified data repository network element sends the response to the first request to the network device, where the response to the first request is used by the network device to process the service corresponding to the first user identifier.

All or some of the foregoing embodiments may be implemented through software, hardware, firmware, or any combination thereof. When a software program is used for implementation, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions listed in the claims. Some measures are recorded in dependent claims that are different from each other, but this does not mean that these measures cannot be combined to produce a better effect.

Although this application is described with reference to specific features and embodiments thereof. It is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies of this application.

## Claims

1. A data processing method, comprising:
receiving, by a visited unified data repository network element, a first request from a network device, wherein the first request is used to request to perform a first processing operation on first data corresponding to a first user identifier, and the first data is associated with a service corresponding to the first user identifier;
sending, by the visited unified data repository network element, the first request to a global unified data repository network element when determining that the first data does not exist locally;
receiving, by the visited unified data repository network element, a response to the first request from the global unified data repository network element; and
sending, by the visited unified data repository network element, the response to the first request to the network device, wherein the response to the first request is used to indicate an operation result of the first processing operation.

2. The method according to claim 1, wherein the first data belongs to management data corresponding to the first user identifier; and
the network device is a unified data management network element, and the management data is user data corresponding to the first user identifier; or
the network device is a policy control function network element, and the management data is policy data corresponding to the first user identifier.

3. The method according to claim 2, wherein the method further comprises:
receiving, by the visited unified data repository network element, a second request from the global unified data repository network element, wherein the second request is used to request to insert the management data corresponding to the first user identifier; and
inserting, by the visited unified data repository network element, the management data corresponding to the first user identifier.

4. The method according to claim 3, wherein the method further comprises:
receiving, by the visited unified data repository network element, first rollback information from the global unified data repository network element; and
canceling, by the visited unified data repository network element based on the first rollback information, the operation of inserting the management data corresponding to the first user identifier.

5. The method according to any one of claims 1 to 4, wherein the method further comprises:
receiving, by the visited unified data repository network element, service policy configuration information from the global unified data repository network element, and storing the service policy configuration information, wherein
the service policy configuration information is used by the network device to process the service.

6. The method according to any one of claims 1 to 5, wherein the first processing operation comprises addition, deletion, modification, or query.

7. The method according to any one of claims 1 to 6, comprising:
periodically initiating, by the visited unified data repository network element, periodic forward verification to the global unified data repository network element; or responding, by the visited unified data repository network element, to a reverse verification request initiated by the global unified data repository network element.

8. A data processing method, comprising:
receiving, by a global unified data repository network element, a first request from a visited unified data repository network element, wherein the first request is used to request to perform a first processing operation on first data corresponding to a first user identifier, and the first data is associated with a service corresponding to the first user identifier;
sending, by the global unified data repository network element, the first request to a home unified data repository network element, wherein the home unified data repository network element corresponds to home location information of the first user identifier;
receiving, by the global unified data repository network element, a response to the first request from the home unified data repository network element; and
sending, by the global unified data repository network element, the response to the first request to the visited unified data repository network element, wherein the response to the first request is used to indicate an operation result of the first processing operation.

9. The method according to claim 8, wherein the first data belongs to management data corresponding to the first user identifier, the global unified data repository network element stores the management data corresponding to the first user identifier, the first processing operation is an update operation, and the method further comprises:
receiving, by the global unified data repository network element, synchronization information from the home unified data repository network element; and
updating, by the global unified data repository network element, the first data in the stored management data based on the synchronization information.

10. The method according to claim 8 or 9, wherein the method further comprises:
receiving, by the global unified data repository network element, a first service request corresponding to the first user identifier from a provisioning server;
sending, by the global unified data repository network element, the first service request to the home unified data repository network element, wherein the first service request is used to request to perform a third processing operation on third data corresponding to the first user identifier, and the third data belongs to the management data corresponding to the first user identifier;
receiving, by the global unified data repository network element, a response to the first service request from the home unified data repository network element; and
sending, by the global unified data repository network element, the response to the first service request to the provisioning server, wherein the response to the first service request is used to indicate a result of the third processing operation.

11. The method according to any one of claims 8 to 10, wherein the first data belongs to the management data corresponding to the first user identifier, and the method further comprises:
receiving, by the global unified data repository network element, a migration service request corresponding to the first user identifier from the provisioning server;
sending, by the global unified data repository network element, a second request to the visited unified data repository network element based on the migration service request, wherein the second request is used to indicate to insert the management data corresponding to the first user identifier;
sending, by the global unified data repository network element, a third request to the home unified data repository network element based on the migration service request, wherein the third request is used to indicate to delete the management data corresponding to the first user identifier; and
updating, by the global unified data repository network element, the home location information of the first user identifier, wherein updated home location information of the first user identifier corresponds to the visited unified data repository network element.

12. The method according to claim 11, wherein the method further comprises:
after receiving a deletion failure response from the home unified data repository network element or an insertion failure response from the visited unified data repository network element, sending, by the global unified data repository network element, first rollback information to the visited unified data repository network element, and sending second rollback information to the home unified data repository network element, wherein
the first rollback information is used to indicate to cancel the operation of inserting the management data corresponding to the first user identifier, and the second rollback information is used to indicate to cancel the operation of deleting the management data corresponding to the first user identifier.

13. The method according to any one of claims 8 to 10, wherein the method further comprises:
receiving, by the global unified data repository network element, a card migration service request from the provisioning server;
sending, by the global unified data repository network element, a fourth request to the home unified data repository network element based on the card migration service request, wherein the fourth request is used to indicate to insert card data of a user identification card in the management data corresponding to the first user identifier; and
sending, by the global unified data repository network element, a fifth request to the visited unified data repository network element based on the card migration service request, wherein the fifth request is used to indicate to delete the card data of the user identification card in the management data corresponding to the first user identifier.

14. The method according to any one of claims 8 to 13, wherein the global unified data repository network element stores the management data corresponding to the first user identifier, and the method further comprises:
receiving, by the global unified data repository network element, a sixth request from the home unified data repository network element, wherein the sixth request is used to request to perform a second processing operation on second data corresponding to the first user identifier, the second data belongs to the management data corresponding to the first user identifier, and the second data is associated with the service corresponding to the first user identifier;
determining, by the global unified data repository network element, that the home location information of the first user identifier is not stored;
sending, by the global unified data repository network element, the management data corresponding to the first user identifier to the home unified data repository network element;
receiving, by the global unified data repository network element, a management data storage success response from the home unified data repository network element; and
storing, by the global unified data repository network element, a correspondence between the first user identifier and the home location information, wherein the home location information corresponds to the home unified data repository network element.

15. The method according to any one of claims 8 to 14, wherein the method further comprises:
sending, by the global unified data repository network element, service policy configuration information to the visited unified data repository network element and the home unified data repository network element.

16. The method according to claim 9 or any one of claims 11 to 14, wherein the management data is user data corresponding to the first user identifier, or the management data is policy data corresponding to the first user identifier.

17. The method according to any one of claims 8 to 16, comprising:
periodically initiating, by the global unified data repository network element, periodic reverse verification to the visited unified database network element and the home unified database network element; or
responding, by the global unified data repository network element, to forward verification requests initiated by the visited unified data repository network element and the home database storage network element.

18. The method according to any one of claims 8 to 17, wherein the first processing operation comprises addition, deletion, modification, or query.

19. A data processing method, comprising:
receiving, by a home unified data repository network element, a first request from a global unified data repository network element, wherein the first request is used to request to perform a first processing operation on first data corresponding to a first user identifier, and the first data is associated with a service corresponding to the first user identifier;
performing, by the home unified data repository network element, the first processing operation on the first data based on the first request; and
sending, by the home unified data repository network element, a response to the first request to the global unified data repository network element, wherein the response to the first request is used to indicate an operation result of the first processing operation.

20. The method according to claim 19, wherein the first data belongs to management data corresponding to the first user identifier, the first processing operation is an update operation, and the method further comprises:
sending, by the home unified data repository network element, synchronization information to the global unified data repository network element, wherein the synchronization information is used to indicate to update the first data in the management data that corresponds to the first user identifier and that is stored in the global unified data repository network element.

21. The method according to claim 19 or 20, wherein the method further comprises:
receiving, by the home unified data repository network element, a first service request from the global unified data repository network element;
performing, by the home unified data repository network element based on the first service request, a third processing operation on third data corresponding to the first user identifier, wherein the third data is associated with the service corresponding to the first user identifier; and
sending, by the home unified data repository network element, a response to the first service request to the global unified data repository network element, wherein the response to the first service request is used to indicate a result of the third processing operation.

22. The method according to claim 19 or 20, wherein the first data belongs to the management data corresponding to the first user identifier, and the method further comprises:
receiving, by the home unified data repository network element, a third request from the global unified data repository network element, wherein the third request is used to indicate to delete the management data corresponding to the first user identifier; and
deleting, by the home unified data repository network element based on the third request, the management data corresponding to the first user identifier.

23. The method according to claim 22, wherein the method further comprises:
receiving, by the home unified data repository network element, second rollback information from the global unified data repository network element; and
canceling, by the home unified data repository network element based on the second rollback information, the operation of deleting the management data corresponding to the first user identifier.

24. The method according to any one of claims 19 to 21, wherein the method further comprises:
sending, by the home unified data repository network element, a sixth request to the global unified data repository network element, wherein the sixth request is used to request to perform a second processing operation on second data corresponding to the first user identifier, the second data is associated with the service corresponding to the first user identifier, the second data belongs to the management data corresponding to the first user identifier, and the home unified data repository network element does not store the management data corresponding to the first user identifier;
receiving, by the home unified data repository network element, the management data corresponding to the first user identifier from the global unified data repository network element; and
storing, by the home unified data repository network element, the management data corresponding to the first user identifier, and sending a management data storage success response to the global unified data repository network element.

25. The method according to any one of claims 19 to 24, wherein the method further comprises:
receiving, by the home unified data repository network element, service policy configuration information from the global unified data repository network element, and storing the service policy configuration information, wherein
the service policy configuration information is used by a unified data management network element or a policy control function network element corresponding to the home unified data repository network element to process the service.

26. The method according to claim 20 or any one of claims 22 to 24, wherein the management data is user data corresponding to the first user identifier, or the management data is policy data corresponding to the first user identifier.

27. The method according to any one of claims 19 to 26, wherein the first processing operation comprises a query operation or an update operation, and the update operation comprises an insertion operation, a deletion operation, or a replacement operation.

28. A data processing apparatus, wherein the data processing apparatus is a visited unified data repository network element, and comprises:
a receiving module, configured to receive a first request from a network device, wherein the first request is used to request to perform a first processing operation on first data corresponding to a first user identifier, and the first data is associated with a service corresponding to the first user identifier; and
a sending module, configured to send the first request to a global unified data repository network element when it is determined that the first data does not exist locally, wherein
the receiving module is further configured to receive a response to the first request from the global unified data repository network element; and
the sending module is further configured to send the response to the first request to the network device, wherein the response to the first request is used to indicate an operation result of the first processing operation.

29. The data processing apparatus according to claim 28, wherein the first data belongs to management data corresponding to the first user identifier; and
the network device is a unified data management network element, and the management data is user data corresponding to the first user identifier; or
the network device is a policy control function network element, and the management data is policy data corresponding to the first user identifier.

30. The data processing apparatus according to claim 29, wherein the data processing apparatus further comprises a processing module;
the receiving module is further configured to receive a second request from the global unified data repository network element, wherein the second request is used to request to insert the management data corresponding to the first user identifier; and
the processing module is configured to insert the management data corresponding to the first user identifier.

31. The data processing apparatus according to claim 30, wherein
the receiving module is further configured to receive first rollback information from the global unified data repository network element; and
the processing module is further configured to cancel, based on the first rollback information, the operation of inserting the management data corresponding to the first user identifier.

32. The data processing apparatus according to any one of claims 28 to 31, wherein
the receiving module is further configured to receive service policy configuration information from the global unified data repository network element, and store the service policy configuration information, wherein
the service policy configuration information is used by the network device to process the service.

33. The data processing apparatus according to any one of claims 28 to 32, wherein the first processing operation comprises addition, deletion, modification, or query.

34. The data processing apparatus according to any one of claims 28 to 33, wherein
the processing module is further configured to: initiate periodic forward verification to the global unified data repository network element, or respond to a reverse verification request initiated by the global unified data repository network element.

35. A data processing apparatus, wherein the data processing apparatus is a global unified data repository network element, and comprises:
a receiving module, configured to receive a first request from a visited unified data repository network element, wherein the first request is used to request to perform a first processing operation on first data corresponding to a first user identifier, and the first data is associated with a service corresponding to the first user identifier; and
a sending module, configured to send the first request to a home unified data repository network element, wherein the home unified data repository network element corresponds to home location information of the first user identifier, wherein
the receiving module is further configured to receive a response to the first request from the home unified data repository network element; and
the sending module is further configured to send the response to the first request to the visited unified data repository network element, wherein the response to the first request is used to indicate an operation result of the first processing operation.

36. The data processing apparatus according to claim 35, wherein the first data belongs to management data corresponding to the first user identifier, the global unified data repository network element stores the management data corresponding to the first user identifier, and the first processing operation is an update operation;
the receiving module is further configured to receive synchronization information from the home unified data repository network element; and
the data processing apparatus further comprises a processing module, and the processing module is configured to update the first data in the stored management data based on the synchronization information.

37. The data processing apparatus according to claim 35 or 36, wherein
the receiving module is further configured to receive a first service request corresponding to the first user identifier from a provisioning server;
the sending module is further configured to send the first service request to the home unified data repository network element, wherein the first service request is used to request to perform a third processing operation on third data corresponding to the first user identifier, and the third data belongs to the management data corresponding to the first user identifier;
the receiving module is further configured to receive a response to the first service request from the home unified data repository network element; and
the sending module is further configured to send the response to the first service request to the provisioning server, wherein the response to the first service request is used to indicate a result of the third processing operation.

38. The data processing apparatus according to any one of claims 35 to 37, wherein the first data belongs to the management data corresponding to the first user identifier;
the receiving module is further configured to receive a migration service request corresponding to the first user identifier from the provisioning server;
the sending module is further configured to send a second request to the visited unified data repository network element based on the migration service request, wherein the second request is used to indicate to insert the management data corresponding to the first user identifier;
the sending module is further configured to send a third request to the home unified data repository network element based on the migration service request, wherein the third request is used to indicate to delete the management data corresponding to the first user identifier; and
the processing module is further configured to update the home location information of the first user identifier, wherein updated home location information of the first user identifier corresponds to the visited unified data repository network element.

39. The data processing apparatus according to claim 38, wherein
the sending module is further configured to: after the receiving module receives a deletion failure response from the home unified data repository network element or an insertion failure response from the visited unified data repository network element, send first rollback information to the visited unified data repository network element, and send second rollback information to the home unified data repository network element, wherein
the first rollback information is used to indicate to cancel the operation of inserting the management data corresponding to the first user identifier, and the second rollback information is used to indicate to cancel the operation of deleting the management data corresponding to the first user identifier.

40. The data processing apparatus according to any one of claims 35 to 37, wherein
the receiving module is further configured to receive a card migration service request from the provisioning server;
the sending module is further configured to send a fourth request to the home unified data repository network element based on the card migration service request, wherein the fourth request is used to indicate to insert card data of a user identification card in the management data corresponding to the first user identifier; and
the sending module is further configured to send a fifth request to the visited unified data repository network element based on the card migration service request, wherein the fifth request is used to indicate to delete the card data of the user identification card in the management data corresponding to the first user identifier.

41. The data processing apparatus according to any one of claims 35 to 40, wherein the global unified data repository network element stores the management data corresponding to the first user identifier;
the receiving module is further configured to receive a sixth request from the home unified data repository network element, wherein the sixth request is used to request to perform a second processing operation on second data corresponding to the first user identifier, the second data belongs to the management data corresponding to the first user identifier, and the second data is associated with the service corresponding to the first user identifier;
the processing module is further configured to determine that the home location information of the first user identifier is not stored;
the sending module is further configured to send the management data corresponding to the first user identifier to the home unified data repository network element;
the receiving module is further configured to receive a management data storage success response from the home unified data repository network element; and
the processing module is further configured to store a correspondence between the first user identifier and the home location information, wherein the home location information corresponds to the home unified data repository network element.

42. The data processing apparatus according to any one of claims 35 to 41, wherein
the sending module is further configured to send service policy configuration information to the visited unified data repository network element and the home unified data repository network element.

43. The data processing apparatus according to claim 36 or any one of claims 38 to 41, wherein the management data is user data corresponding to the first user identifier, or the management data is policy data corresponding to the first user identifier.

44. The data processing apparatus according to any one of claims 35 to 43, wherein
the processing module is further configured to: periodically initiate periodic reverse verification to the visited unified database network element and the home unified database network element, or respond to forward verification requests initiated by the visited unified data repository network element and the home database storage network element.

45. The data processing apparatus according to any one of claims 35 to 44, wherein the first processing operation comprises addition, deletion, modification, or query.

46. A data processing apparatus, wherein the data processing apparatus is a home unified data repository network element, and comprises:
a receiving module, configured to receive a first request from a global unified data repository network element, wherein the first request is used to request to perform a first processing operation on first data corresponding to a first user identifier, and the first data is associated with a service corresponding to the first user identifier;
a processing module, configured to perform the first processing operation on the first data based on the first request; and
a sending module, configured to send a response to the first request to the global unified data repository network element, wherein the response to the first request is used to indicate an operation result of the first processing operation.

47. The data processing apparatus according to claim 46, wherein the first data belongs to management data corresponding to the first user identifier, and the first processing operation is an update operation; and
the sending module is further configured to send synchronization information to the global unified data repository network element, wherein the synchronization information is used to indicate to update the first data in the management data that corresponds to the first user identifier and that is stored in the global unified data repository network element.

48. The data processing apparatus according to claim 46 or 47, wherein the data processing apparatus further comprises a processing module;
the receiving module is further configured to receive a first service request from the global unified data repository network element;
the processing module is configured to perform, based on the first service request, a third processing operation on third data corresponding to the first user identifier, wherein the third data is associated with the service corresponding to the first user identifier; and
the sending module is further configured to send a response to the first service request to the global unified data repository network element, wherein the response to the first service request is used to indicate a result of the third processing operation.

49. The data processing apparatus according to claim 46 or 47, wherein the first data belongs to the management data corresponding to the first user identifier;
the receiving module is further configured to receive a third request from the global unified data repository network element, wherein the third request is used to indicate to delete the management data corresponding to the first user identifier; and
the processing module is further configured to delete, based on the third request, the management data corresponding to the first user identifier.

50. The data processing apparatus according to claim 49, wherein
the receiving module is further configured to receive second rollback information from the global unified data repository network element; and
the processing module is further configured to cancel, based on the second rollback information, the operation of deleting the management data corresponding to the first user identifier.

51. The data processing apparatus according to any one of claims 46 to 48, wherein
the sending module is further configured to send a sixth request to the global unified data repository network element, wherein the sixth request is used to request to perform a second processing operation on second data corresponding to the first user identifier, the second data is associated with the service corresponding to the first user identifier, the second data belongs to the management data corresponding to the first user identifier, and the home unified data repository network element does not store the management data corresponding to the first user identifier;
the receiving module is further configured to receive the management data corresponding to the first user identifier from the global unified data repository network element;
the processing module is further configured to store the management data corresponding to the first user identifier; and
the sending module is further configured to send a management data storage success response to the global unified data repository network element.

52. The data processing apparatus according to any one of claims 46 to 51, wherein
the receiving module is further configured to receive service policy configuration information from the global unified data repository network element; and
the processing module is further configured to store the service policy configuration information, wherein
the service policy configuration information is used by a unified data management network element or a policy control function network element corresponding to the home unified data repository network element to process the service.

53. The processing apparatus according to claim 47 or any one of claims 49 to 51, wherein the management data is user data corresponding to the first user identifier, or the management data is policy data corresponding to the first user identifier.

54. The data processing apparatus according to any one of claims 28 to 53, wherein the first processing operation comprises a query operation or an update operation, and the update operation comprises an insertion operation, a deletion operation, or a replacement operation.

55. A communications system, comprising a visited unified data repository network element, a global unified data repository network element, and a home unified data repository network element, wherein
the visited unified data repository network element and the home unified data repository network element are separately connected to the global unified data repository network element;
the visited unified data repository network element and the home unified data repository network element separately correspond to different regions;
the visited unified data repository network element and the home unified data repository network element separately store management data corresponding to different user identifiers; and
the global unified data repository network element stores routing information of the user identifiers.

56. The communications system according to claim 55, wherein the communications system further comprises a network device;
the visited unified data repository network element is configured to receive a first request from the network device, wherein the first request is used to request to perform a first processing operation on first data corresponding to a first user identifier, and the first data is associated with a service corresponding to the first user identifier;
the visited unified data repository network element is further configured to send the first request to the global unified data repository network element;
the global unified data repository network element is configured to send the first request to the home unified data repository network element based on the routing information, wherein the routing information comprises home location information of the first user identifier, and the home unified data repository network element corresponds to the home location information of the first user identifier;
the home unified data repository network element is configured to perform the first processing operation on the first data;
the home unified data repository network element is further configured to send a response to the first request to the global unified data repository network element;
the global unified data repository network element is further configured to send the response to the first request to the visited unified data repository network element; and
the visited unified data repository network element is further configured to send the response to the first request to the network device, wherein the response to the first request is used by the network device to process the service corresponding to the first user identifier.

57. A data processing apparatus, comprising at least one processor and a memory, wherein the at least one processor is coupled to the memory, wherein
the memory is configured to store a computer program; and
the at least one processor is configured to execute the computer program stored in the memory, so that the apparatus is enabled to perform the method according to any one of claims 1 to 7, or perform the method according to any one of claims 8 to 18, or perform the method according to any one of claims 19 to 27.

58. A data processing apparatus, configured to perform the method according to any one of claims 1 to 7, or perform the method according to any one of claims 8 to 18, or perform the method according to any one of claims 19 to 27.

59. A computer-readable storage medium, wherein the computer-readable storage medium stores a computer program or instructions, and when the computer program or the instructions are run, the method according to any one of claims 1 to 7 is implemented, or the method according to any one of claims 8 to 18 is implemented, or the method according to any one of claims 19 to 27 is implemented.

60. A computer program product, comprising computer-executable instructions, wherein the computer-executable instructions are used to enable a computer to perform the method according to any one of claims 1 to 7, or perform the method according to any one of claims 8 to 18, or perform the method according to any one of claims 19 to 27.
